# NEUE EUROPÄISCHE PATENTSCHRIFT

(11) **EP 2 197 656 B2**
(45) Veröffentlichungstag und Bekanntmachung des Hinweises auf die Entscheidung über den Einspruch: **28.11.2018**
(45) Hinweis auf die Patenterteilung: 24.08.2011
(21) Anmeldenummer: 08802639.8
(22) Anmeldetag: 26.09.2008
(51) Int. Cl.: B29C 51/42, B29C 51/46, B29C 51/02, B29C 51/10, B29C 45/14, B29K 69/00, B29K 75/00, B29K 23/00, B29K 33/04, B29K 25/00

(54) **VERFAHREN ZUR HERSTELLUNG EINES TIEFGEZOGENEN FOLIENTEILS AUS THERMOPLASTISCHEM KUNSTSTOFF**
METHOD FOR PRODUCING A DEEP-DRAWN FILM PART FROM A THERMOPLASTIC MATERIAL
PROCÉDÉ DE RÉALISATION D'UNE PIÈCE MINCE EMBOUTIE EN MATIÈRE THERMOPLASTIQUE

(30) Priorität: 28.09.2007 DE 102007046472
(43) Veröffentlichungstag der Anmeldung: 23.06.2010
(73) Patentinhaber: Covestro Deutschland AG, 51373 Leverkusen (DE)
(72) Erfinder: NIEBLING, Curt, 82377 Penzberg (DE); MEYER, Klaus, 41539 Dormagen (DE)
(74) Vertreter: Davepon, Björn
(86) Internationale Anmeldenummer: PCT/EP2008/008182
(87) Internationale Veröffentlichungsnummer: WO 2009/043539

(56) Entgegenhaltungen:
- EP-A- 0 371 425
- JP-A- 2003 200 486
- JP-A- 2006 130 774
- US-B1- 6 257 866

## Beschreibung

Die vorliegende Erfindung betrifft ein Verfahren zur Herstellung eines wenigstens teilweise bedruckten, metallisierten und/oder sonst wie beschichteten, tiefgezogenen Folienteils aus Polymethylmethacrylat bzw. Poly(meth)acrylat (PMMA).

Abhängig von ihrer Anwendung weisen die erfindungsgemäß erhältlichen, (tiefgezogenen Folienteile bzw. Tiefziehteile typischerweise eine, einem vorgegebenen Layout folgende, graphische, funktionale und/oder dekorative Gestaltung mit unterschiedlich gefärbten Abschnitten und gegebenenfalls mit zusätzlich einem oder mehreren transparenten Abschnitt(en) auf. Diese Tiefziehteile können beispielsweise als Leuchtenabdeckungen, als beleuchtete Schilder, als Gehäuseteile, als beleuchtbare Druck-oder Schalter-Tasten, als Display-Einrichtungen, als Skalen-, Armaturen-und/ oder Instrumenten-Anzeigetafeln, sowie als Zifferblätter und Signalanzeigen verschiedenster Art eingesetzt werden. Ein wichtiges Anwendungsgebiet bezieht sich auf die Anzeigetafeln oder Anzeigeelemente der Instrumente, Skalen und Anzeigen am Armaturenbrett von Kraftfahrzeugen; hier beispielsweise die Anzeigetafel des Fahrgeschwindigkeits-Anzeigegerätes bzw. Tachometer; diese Tachometer-Anzeigetafeln werden in der Fachwelt auch als "Tachoscheiben" bezeichnet. Ohne dass damit eine Einschränkung der vorliegenden Erfindung beabsichtigt ist, wird das erfindungsgemäße Verfahren nachstehend anhand der Herstellung solcher Tachoscheiben erläutert.

Das grundlegende Verfahren zur Umformung einer Platte oder Folie aus Kunststoff zu einem meist relativ einfach geformten Formkörper ist das Thermoformen oder "Thermoforming". Hier wird das ebene Ausgangsmaterial auf eine so hohe Formungstemperatur erwärmt, dass es weich und plastisch wird und in diesem Zustand unter Einwirkung relativ geringer Formkräfte die Kontur eines Formwerkzeugs angeformt werden kann. Diese Formkräfte können beispielsweise aufgebracht werden durch Anlegung von Vakuum (Vakuumverfahren), durch Beaufschlagung mit einem fluiden Druckmittel unter einem Druckmitteldruck bis zu etwa 4 bis 6 bar (Pressluftverfahren) oder durch eine Kombination beider Maßnahmen. Für PMMA-Folien, hier Plexiglas® XT (von RÖHM GMBH) wird herstellerseitig eine Formungstemperatur von 160 bis 170 °C angegeben. Zum Thermoformen von PC-Folien, hier Makrofol® (von BAYER AG) muss die Folie vorher im Wärmeofen wenigstens 8 h lang bei wenigstens 80 °C getempert werden, um Lösemittelreste zu entfernen. Anschließend wird die getemperte Folie auf eine Formungstemperatur oberhalb 220 °C erwärmt, beispielsweise 15 bis 20 sec lang zwischen einer Oberheizung mit einer Strahleroberflächentemperatur von 600 °C und einer Unterheizung mit einer Strahleroberflächentemperatur von 400 °C gehalten. Ohne vorherige Temperbehandlung würden die Lösemittelreste bei der Erwärmung auf die Formungstemperatur und beim nachfolgenden Tiefziehen eine Blasenbildung verursachen. Weil beim Thermoformen nur mit relativ geringen Formkräften gearbeitet wird, muss das Material zur Umformung sehr weich und plastisch sein. Typischerweise werden so relativ einfach geformte Formkörper wie Gehäuse und Behälter erhalten. Eine präzise Wiedergabe einer graphischen Gestaltung und/oder eine echte und genaue Abformung scharfkantiger Strukturen der ebenen Ausgangsfolie je am fertigen Formkörper ist nicht möglich.

Dem gegenüber bezieht sich die vorliegende Erfindung auf ein Verfahren zur Herstellung eines wenigstens teilweise bedruckten, metallisierten und/oder sonst wie beschichteten, tiefgezogenen Folienteils mit wenigstens nachstehenden Verfahrensschritten:
- es wird ein ebenes, auf einer oder auf beiden Oberfläche(n) wenigstens teilweise bedrucktes oder metallisiertes und/oder sonst wie beschichtetes Folienstück aus Polymethylmethacrylat bzw. Poly(meth)acrylat (PMMA) bereitgestellt, das wenigstens einen Folienabschnitt umfasst, der hinsichtlich Größe und Bedruckung, Metallisierung und/oder Beschichtung dem herzustellenden Tiefziehteil entspricht;
- dieses Folienstück wird in definierter Anordnung an einem Rahmen angebracht, wobei lediglich die randseitigen Abschnitte des Folienstücks auf dem Rahmen aufliegen;
- das an dem Rahmen gehaltene Folienstück wird in eine Heizzone eingebracht, und dort wenigstens der Folienabschnitt auf eine vorgegebene Temperatur erwärmt; und
- das so erwärmte Folienstück wird anschließend rasch in eine Verformungszone eingebracht und dort unmittelbar und direkt mit einem fluiden Druckmittel unter einem Druckmitteldruck größer 20 bar beaufschlagt und innerhalb einer Zeitspanne kleiner 5 sec isostatisch zu dem gewünschten Tiefziehteil umgeformt.

Ein ähnliches Verfahren dieser Art ist aus dem Dokument EP 0 371 425 B1 bekannt; dieses Verfahren wird in der Fachwelt auch als "Hochdruckverformung bzw. Hochdruckumformung" von Kunststoff-Folien bzw. als "Höchstdruckverfahren" bzw. als "Kaltverformen von Folien nach dem High Pressure Forming" bzw. als HPF-Verfahren (von High Pressure Forming) bezeichnet. Nach diesem bekannten Verfahren wird beispielsweise eine transparente, eine Schichtdicke von 125 µm aufweisende PC-Folie (Makrofol®, bezogen von BAYER AG) mit einer Erweichungstemperatur von etwa 150 °C auf eine Arbeitstemperatur im Bereich von 90 bis 120 °C erwärmt und daraufhin mit Hilfe von Druckluft von 150 bar umgeformt. Diese Arbeitstemperatur bezieht sich auf die gesamte Folie.

Das Dokument DE 41 13 568 C1 beschreibt eine Vorrichtung zur Hochdruckverformung von Kunststoff-Folien nach diesem HPF-Verfahren. Eine solche automatisch arbeitende Vorrichtung weist wenigstens auf:
- einen endlosen Strang verschieblicher, rahmenartiger Paletten, die von einem Förderer schrittweise durch die verschiedenen Arbeitsstationen der Vorrichtung geführt werden;
- eine Auflegestation, in welcher je ein ebenes, zu verformendes Folienstück in definierter Anordnung auf je einer Palette angeordnet wird;
- eine Heizstation, in welcher jedes Folienstück auf eine vorgegebene Temperatur erwärmt wird;
- eine Formstation mit einem Formwerkzeug, an dessen Formhohlraum das Folienstück angeformt wird;
- eine Entnahmestation, in welcher das in der Formstation verformte, tiefgezogene Folienstück von der, dieses haltenden Palette gelöst wird und in einen Sammelbehälter gelangt; und
- eine Quelle für unter erhöhtem Druck gehaltenes fluides Druckmittel, insbesondere Druckluft, mit welcher das im Formwerkzeug angeordnete Folienstück beaufschlagt und verformt wird.

Eine dort im Einzelnen beschriebene Heizstation weist drei nebeneinander in einer gemeinsamen Ebene ausgerichtete Heizfelder auf, die im Abstand oberhalb der Bewegungsbahn des Palettenstranges angeordnet sind. Jedes Heizfeld weist eine Anzahl Infrarot-Flächenstrahler auf, von denen einige unabhängig ansteuerbar sind. Vorzugsweise sind die randständigen Infrarot-Flächenstrahler unabhängig ansteuerbar. Ein Pilotstrahler ist mit Sensoren zur Erfassung der Umgebungstemperatur und seiner Oberflächentemperatur ausgestattet. Die Oberflächentemperatur des Pilotstrahlers kann in engen Grenzen konstant gehalten werden. Der Pilotstrahler liefert Signale zur Steuerung der unabhängig ansteuerbaren Infrarot-Flächenstrahler, um deren Heizfläche ebenfalls auf einer vorgegeben Temperatur zu halten.

Während des schrittweisen Vorschubs verbleibt das zu erwärmende Folienstück eine gegebene Zeitspanne lang im Abstand zu diesen Heizfeldem und wird auf die vorgesehene Arbeitstemperatur erwärmt. Mit Hilfe der, eine höhere Temperatur aufweisenden, randständigen Infrarot-Flächenstrahler kann gewährleistet werden, dass auch die Randabschnitte des Folienstücks die gleiche Temperatur, wie der Zentralabschnitt annehmen, so dass das gesamte Folienstück eine einheitliche, bestimmte, vorgegebene Arbeitstemperatur aufweist.

Eine Besonderheit dieser bekannten Hochdruckverformung von Kunststoff-Folien besteht darin, dass die Verformung bei einer Arbeitstemperatur unterhalb der Kunststoff-Erweichungstemperatur des jeweiligen Folienmaterials vorgenommen wird. Beispielsweise hat das dort verwendete Polycarbonat-Material auf der Basis Bisphenol A (Makrolon® von BAYER AG) eine Erweichungstemperatur, von etwa 150° C; und die Hochdruckumformung. wird bei einer Arbeitstemperatur der gesamten erwärmten Folie von etwa 120 °C durchgeführt.

Die praktische Erfahrung zeigt, dass an, unter solchen Bedingungen tiefgezogenen Folienteilen häufig noch gewisse Rückstellkräfte auftreten. Die so erzeugten, tiefgezogenen Folienteile sind daher häufig noch mit weiterem transparenten Kunststoff hinterspritzt worden, um formstabile Produkte bereitzustellen. Diese Verfahren werden in der Fachwelt auch als Insert Moulding bezeichnet. Zum Hinterspritzen bzw. Insert Moulding wird das bedruckte und tiefgezogene Folienteil so in ein Spritzgusswerkzeug eingelegt, dass die Bedruckung zur Düsenseitegerichtet ist, und beispielsweise mit einer 0,5 bis 3,0 mm dicken Schicht eines thermoplastischen Kunststoffs hinterspritzt. Gut geeignet ist beispielsweise ein Heißkanal-Werkzeug mit Nadelverschlussanguss. Zum Hinterspritzen eignen sich thermoplastische Kunststoffe wie etwa PC. Mischungen aus PC mit Acrylnitril-Butadien-Styrol-Copolymerisaten (ABS) und PMMA-Materialien. Das zum Hinterspritzen verwendete schmelzflüssige Material trifft mit einer Temperatur von etwa 220 °C bis 300 °C auf die bedruckte Folie. Um hier Schäden am Dekor zu vermeiden, kann die Folie im Bereich der Einspritzkanäle mit einem Schutzelement versehen werden; vgl. hierzu etwa DE 103 12 610 A1.

Das Dokument EP 1 023 150 B1 betrifft u.a. ein Verfahren zur Herstellung eines Formkörpers. Bei diesem Verfahren wird eine ebene, wahlweise gefärbte Folie, die beispielsweise aus PC bestehen kann, über einem Formhohlraum angeordnet. Auf dieser Folie wird schmelzflüssiger Kunststoff angeordnet, beispielsweise ebenfalls PC. Weil die Folie im Kontakt mit der Kunststoffschmelze bereits weich und plastisch wird, kann im Formhohlraum ein mäßiger Gasdruck aufgebaut werden, der das Gewicht von Folie und Kunststoffschmelze abstützt, um ein Durchhängen der Folie unter dem Gewicht des schmelzflüssigen Kunststoffs zu vermeiden. Anschließend wird mit Hilfe eines Gesenks oder Stempels die Kombination aus Folie und Kunststoffschmelze in den Formhohlraum hineingedrückt, und die Folie zur Anlage an der Formhohlraumwand gebracht. Nach der Abkühlung wird ein gegebenenfalls dünnwandiger Formkörper erhalten, dessen Außenschicht aus der gegebenenfalls gefärbten Folie besteht.

Nach einem alternativen Verfahren dieser Art (vgl. das Dokument. US 6 506 334 B1) überdeckt das Folienstück den Formhohlraum in einer Unterform. Auf diesem Folienstück wird ein weiteres, passend zurecht geschnittenes Stück Plastik aufgelegt, das vorher auf eine bestimmte Temperatur erwärmt worden ist. Üblicherweise handelt es sich hierbei um die Schmelztemperatur des Kunststoffs, aus dem das Plastikstück besteht, oder um eine noch höhere Temperatur. Das Plastikstück kann mit Hilfe von Infrarot-Heizung, von Konvektions-Heizung, von Hochfrequenz-Heizung oder mit Hilfe einer sonstigen Erwärmungsmaßnahme auf diese Temperatur erwärmt werden. Anschließend wird die Doppelschichtanordnung aus gegebenenfalls gefärbter Folie und dem heißen Plastikstück mit Hilfe eines Stempels, oder einer Oberform in dem Formhohlraum hinein gedrückt. Diese zuletzt genannten Verfahren werden auch als Compression Moulding bezeichnet.

Die genannten Verfahren, wie etwa Insert Moulding, Compression Moulding und weitere Verfahren dieser Art, liefern mehrschichtige, gegebenenfalls dünnwandige Formkörper, bei denen die Dekorfolie eine Außenschicht bildet, das Dekor selbst sich jedoch innerhalb der Formkörpermasse befindet und damit vor Abrieb geschützt ist. Der Kontakt mit der schmelzflüssigen Kunststoffmasse kann das Dekor an der Dekorschicht beeinträchtigen.

Mit dem Compression Moulding kann typischerweise eine hohe Abbildungsgenauigkeit in der Größenordnung von ± 0,1 mm nicht erhalten werden, weil die gesamte Folie bei der Umformung bereits weich und plastisch ist. Die wenigstens zwei Arbeitsschritte erfordernde Verfahrensweise ist aufwändig. Die einschlägige Industrie verlangt jedoch zunehmend nach tiefgezogenen, einlagigen und formstabilen Folienteilen dieser Art, um so den weiteren Arbeitsschritt der Hinterspritzung mit Kunststoff zu vermeiden.

Davon ausgehend, besteht die Aufgabe der vorliegenden Erfindung darin, ein Verfahren der gattungsgemäßen Art (vgl. EP 0 371 425 B1) anzugeben, mit dem einlagige, tiefgezogene und formstabile Folienteile aus wenigstens einem thermoplastischen Kunststoff, nämlich aus Polymethylmethacrylat bzw. Poly(meth)acrylat (PMMA) erhältlich sind, die praktisch frei von inneren Spannungen und Rückstellkräften sind und die nach der Hochdruckumformung eine unveränderte, extrem genaue Positionierung der ursprünglichen grafischen, funktionalen und/oder dekorativen Gestaltung in einer Größenordnung von vorzugsweise ±0,1 mm aufweisen.

Ausgehend von einem Verfahren zur Herstellung eines wenigstens teilweise bedruckten, metallisierten und/oder sonst wie beschichteten, tiefgezogenen Folienteils, wird die Erfindung durch die Merkmals des Anspruchs 1 definiert.

Bei der Vicat-Erweichungstemperatur B/50 eines thermoplastischen Kunststoffs handelt es sich um die Vicat-Erweichungstemperatur B/50 nach ISO 306 (50 N: 50 °C/h).

Vorzugsweise können einzelne Folienstücksegmente, vorzugsweise einzelne Segmente des Folienabschnitts, auch noch auf eine erhöhte Temperatur erwärmt werden, welche diese Folienoberflächentemperatur um wenigstens 3°C und um nicht mehr als 10 °C übersteigt, und mit dieser Folientemperatur unter den sonstigen Bedingungen des erfindungsgemäßen Verfahrens umgeformt werden.

Das erfindungsgemäße Verfahren bietet gegenüber den Verfahren gemäß Stand der Technik den Vorteil, dass mit diesem Verfahren tiefgezogene Folienteile erhältlich sind, in denen die Rückstellkräfte und inneren Spannungen minimiert sind bzw. die praktisch frei von inneren Spannungen und Rückstellkräften sind. Zudem kann in den erfindungsgemäß hergestellten tiefgezogenen Folienteilen eine hohe Abbildungsgenauigkeit in der Größenordnung von vorzugsweise ± 0,1 mm erzielt werden. Dies gelingt überraschend durch die erfindungsgemäße Kombination der einzelnen Verfahrensschritte, ohne dass durch die Erwärmung auf eine Folienoberflächentemperatur im angegebenen Bereich oberhalb der Vicat-Erweichungstemperatur B/50 die Folie fließfähig plastisch und die Abbildungsgenauigkeit beim nachfolgenden Verformungsvorgang beeinträchtigt wird.

Erfindungsgemäß wird entweder der gesamte Folienabschnitt oder der überwiegende Teil des Folienabschnitts auf die entsprechende Folienoberflächentemperatur erwärmt. Dabei ist unter dem überwiegenden Teil des Folienabschnitts im Rahmen der Erfindung wenigstens 60 %, bevorzugt wenigstens 70 %, besonders bevorzugt wenigstens 80 %, ganz besonders bevorzugt wenigstens 90 % des Folienabschnitts zu verstehen, der hinsichtlich Größe und Bedrukkung, Metallisierung und/oder Beschichtung dem herzustellenden Tiefziehteil entspricht.

Unter raschem Einbringen des Folienstücks in die Verformungszone im Sinne der vorliegenden Erfindung ist zu verstehen, dass das Folienstück nach Erwärmung auf die je vorgesehene Folienoberflächentemperatur innerhalb einer Zeitspanne von kleiner 10 sec, bevorzugt kleiner 5 sec. besonders bevorzugt kleiner 2 sec, ganz besonders bevorzugt kleiner 1 sec in die Verformungszone überführt wird.

Typischerweise werden Folienstücke im Dickenbereich von 100 µm bis 2.000 µm, vorzugsweise im Dickenbereich von 125 bis 750 µm, besonders bevorzugt im Dickenbereich von 125 bis 600 µm und ganz besonders bevorzugt im Dickenbereich von 200 bis 500 µm in das erfindungsgemäße Verfahren eingesetzt. Für bestimmte Anwendungen kann es vorteilhaft und demnach bevorzugt sein, einen transparenten thermoplastischen Kunststoff einzusetzen.

Erfindungsgemäß geeignete thermoplastische Kunststoffe sind Polymethylmethacrylat bzw. Poly(meth)acrylat (PMMA).

Als Polymethyl(meth)acrylat können sowohl Polymethyl(meth)acrylat (PMMA) als auch schlagzäh modifiziertes PMMA (sz-PMMA), Blends aus PMMA oder aus sz-PMMA eingesetzt werden. Sie sind unter der Marke Plexiglas bei der Röhm GmbH erhältlich. Unter Polymethyl(meth)acrylat werden sowohl Polymere der Methacrylsäure und ihrer Derivate, beispielsweise ihrer Ester, als auch Polymere der Acrylsäure und ihrer Derivate als auch Mischungen aus beiden vorstehenden Komponenten verstanden.

Bevorzugt sind Polymethyl(meth)acrylat-Kunststoffe mit einem Methylmethacrylat-Monomeranteil von mindestens 80 Gew.-%, bevorzugt mindestens 90 Gew.-% und gegebenenfalls 0 Gew.-% bis 20 Gew.-%, bevorzugt 0 Gew.-% bis 10 Gew.-% weiterer vinylisch copolymerisierbarer Monomere wie z. B. Cl- bis C8-Alkylestern der Acrylsäure oder der Methacrylsäure, z. B. Methylacrylat, Ethylacrylat, Butylacrylat, Butylmethacrylat, Hexylmethacrylat, Cyclohexylmethacrylat, ferner Styrol und Styrolderivate, wie beispielsweise [alpha]-Methylstyrol oder p-Methylstyrol. Weitere Monomere können sein Acrylsäure. Methacrylsäure. Maleinsäureanhydrid. Hydroxyester der Acrylsäure oder Hydroxyester der Methacrylsäure.

Die thermoplastischen Kunststoffe können zudem Füllstoffe gegebenenfalls vorzugsweise in einer Menge von bis zu 30 Gew.-% enthalten. Solche Füllstoffe sind dem Fachmann bekannt. Beispielsweise können anorganische Füllstoffe wie z.B. anorganische Pigmente eingesetzt werden.

Zu den geeigneten anorganischen Pigmenten zählen beispielsweise Oxide, wie Siliciumdioxid, Titandioxid, Zirkoniumdioxid, Eisenoxid, Zinkoxid und Chrom(III)- oxid, Sulfide, wie Zinksulfide und Cadmiumsulfide, und Salze, wie Bariumsulfat, Cadmiumselenid, Ultramarin und Nickelchromtitanat. Ebenfalls geeignet als Pigmente im vorliegenden Zusammenhang sind Carbonate, wie Calciumcarbonat und Bariumcarbonat, und Russ. Ein ganz besonders bevorzugtes Farbpigment ist Bariumsulfat. Diese Pigmente werden in die Zusammensetzung der Erfindung in einer Menge von 0,1 bis 30 Gew.-%, bevorzugt 2 bis 15 Gew.-%, bezogen auf das Gewicht der Zusammensetzung, eingearbeitet.

Die thermoplastischen Kunststoffe können zudem Streupigmente als Füllstoffe enthalten, die dem Fachmann gut bekannt sind und beispielsweise in WO-A 2007/045380 beschrieben sind.

Diese Füllstoffe können vorzugsweise in mittleren Teilchengrößen von 0,01 µm bis 50 µm eingesetzt werden.

Bei den erfindungsgemäß zu verformenden Folienstücken aus wenigstens einem thermoplastischen Kunststoff kann es sich auch um eine mehrschichtige Koextrusionsfolie aus wenigstens zwei unterschiedlichen thermoplastischen Kunststoffen handeln. Bevorzugt handelt es sich dabei um eine mindestens zweischichtige Koextrusionsfolie, mit einen Schichtaufbau umfassend
(1) wenigstens eine obere Schicht aus einem thermoplastischen Kunststoff mit einer Vicat-Erweichungstemperatur B/50 (T_{Vicat1)} und
(2) wenigstens eine darunterliegende Schicht aus einem thermoplastischen Kunststoff mit einer Vicat-Erweichungstemperatur B/50 (T_{Vicat2)}, welche höher ist als die Vicat-Erweichungstemperatur B/50 (T_{Vicat1}).

Besonders bevorzugt handelt es sich bei der mehrschichtigen Koextrusionsfolie um eine mindestens dreischichtige, bevorzugt eine dreischichtige Koextrusionsfolie, mit einem Schichtaufbau umfassend
(1) wenigstens eine obere und eine untere Schicht aus einem thermoplastischen Kunststoff mit einer Vicat-Erweichungstemperatur B/50 (T_{Vicat1)} und
(2) wenigstens eine, bevorzugt eine dazwischenliegende Schicht aus einem thermoplastischen Kunststoff mit einer Vicat-Erweichungstemperatur B/50 (T_{Vicat2)}, welche höher ist als die Vicat-Erweichungstemperatur B/50 (T_{Virat1)}.

Im erfindungsgemäßen Verfahren wird vorteilhafterweise die Seite des Folienabschnitts der Koextrusionsfolie aus dem thermoplastischen Kunststoff mit der Vicat-Erweichungstemperatur B/50 (T_{vicat1)} auf die angegebene Folienoberflächentemperatur erwärmt. Bevorzugt liegt die Temperatur, auf die diese Seite des Folienabschnitts erwärmt wird zwischen T_{Vicat1} und T_{Vicat2}.

Anstelle der vorangehend aufgeführten Koextrusionsfolien kann es sich bei den verwendeten Folien auch um mehrschichtige Laminat-Verbundfolien, im Folgenden auch kurz als Laminat-Folien bezeichnet, handeln, bei denen wenigstens zwei Schichten aus wenigstens zwei unterschiedlichen thermoplastischen Kunststoffen mit T_{Vicat1} und T_{Vicat2} aufeinander laminiert werden.

Der Einsatz solcher Koextrusionsfolien oder Laminat-Folien in das erfindungsgemäße Verfahren bietet den zusätzlichen Vorteil, dass selbst bei längerer Erwärmung auf die entsprechende Temperatur oberhalb der Vicat-Erweichungstemperatur der oberen Schicht aufgrund der unteren bzw. mittleren Schicht mit höherer Vicat-Erweichungstemperatur die gesamte Folie nicht plastisch wird und die Gefahr des sichtbaren Durchhängens unter dem Eigengewicht der Folie besser vermieden bzw. reduziert werden kann. Insbesondere bei Einsatz der wenigstens dreischichtigen Koextrusionsfolien oder Laminat-Folien bleibt der Kern einer solchen Koextrusionsfolie oder Laminat-Folie im Sinne der dazwischenliegenden Schicht aus einem thermoplastischen Kunststoff mit einer Vicat-Erweichungstemperatur B/50 (T_{Vicat2}) bleibt bei Durchführung des erfindungsgemäßen Verfahrens vorteilhafterweise bei Temperaturen unterhalb der Vicat-Erweichungstemperatur (T_{Vicat2}).

Im Rahmen der vorliegenden Erfindung ist es ausreichend, wenn nur eine Seite des gesamten Folienabschnitts oder des überwiegenden Teils des Folienabschnitts auf eine Folienoberflächentemperatur im genannten Bereich erwärmt wird. Die andere, gegenüberliegende Seite des gesamten Folienabschnitts oder des überwiegenden Teils des Folienabschnitts kann bei einer niedrigen Folienoberflächentemperatur verbleiben, beispielsweise bei einer bis zu etwa 10 °C niedrigeren Folienoberflächentemperatur verbleiben.

Wird diese Erwärmung mit Hilfe einer Oberflächenheizung vorgenommen, beispielsweise mit Hilfe von Heizstrahlern, so wird der Kernbereich des Folienstücks auch bei Erreichung der Folienoberflächentemperatur im genannten Bereich noch eine niedrigere Kernbereichstemperatur aufweisen, als diese Folienoberflächentemperatur; vorzugsweise kann diese Kembereichstemperatur bis zu etwa 30°C. bevorzugt bis zu 20 °C niedriger sein als diese Folienoberflächentemperatur.

Der Kernbereich umfasst vorzugsweise etwa 60 bis 80 % des Folienquerschnitts, bzw. im Falle der dreischichtigen Koextrusionsfolien bevorzugt den Bereich der mittleren Schicht.

Die vorstehenden Ausführungen zur Folienoberflächentemperatur gelten auch für die nachfolgenden Angaben zur Folienoberflächentemperatur in der nachfolgenden Beschreibung und den Ansprüchen.

Wird nur auf eine Folienoberflächentemperatur unterhalb des genannten Bereiches, in der ganz besonders bevorzugten Ausführungsformen des nicht erfindungsgemäßen Verfahren unter Verwendung von Polycarbonat auf kleiner 180°C erwärmt, können am tiefgezogenen Folienteil immer noch Rückstellkräfte und Verspannungen auftreten, welche die Formstabilität eines einlagigen Folienteils beinträchtigen. Wird dagegen der gesamte Folienabschnitt auf eine Folienoberflächentemperatur deutlich oberhalb des genannten Bereiches, in den ganz besonders bevorzugten Ausführungsformen des nicht erfindungsgemäßen Verfahren unter Verwendung von Polycarbonat auf oberhalb 200 °C erwärmt, so können bereits örtliche Fließvorgänge auftreten, welche die Abbildungsgenauigkeit gefährden.

Vorzugsweise wird der gesamte Folienabschnitt oder der überwiegende Teil des Folienabschnitts in den ganz besonders bevorzugten Ausführungsformen des nicht erfindungsgemäßen Verfahren unter Verwendung von Polycarbonat auf eine Folienoberflächentemperatur im Bereich von 185 °C bis 195 °C erwärmt. Besonders bevorzugt ist hier eine Folienoberflächentemperatur von etwa 190 °C. Eine Folienoberflächentemperatur von etwa 190 °C ist für die typischen handelsüblich zugänglichen PC-Folien, bevorzugt solchen basierend auf Bisphenol A, ausreichend und liefert gute Ergebnisse.

Im Falle weiterer ganz besonders bevorzugten Ausführungsformen des erfindungsgemäßen Verfahren unter Verwendung eines Folienstücks aus Polymethylmethacrylat bzw. Poly(meth)acrylat (PMMA) ist eine Folienoberflächentemperatur im Bereich von 25 bis 50 °C oberhalb der Vicat- Erweichungstemperatur B/50, ganz besonders bevorzugt von 130 bis 150 °C vorgesehen. Wird das PMMA-Folienstück in diesem Fall nur auf eine Folienoberflächentemperatur kleiner 130 °C erwärmt, so können am tiefgezogenen Folienteil immer noch Rückstellkräfte und Verspannungen auftreten, welche die Formstabilität eines einlagigen Folienteils aus PMMA beinträchtigen. Wird dagegen der gesamte Folienabschnitt auf eine Folienoberflächentemperatur deutlich oberhalb 150 °C erwärmt, so können bereits örtliche Fließvorgänge auftreten, welche die Abbildungsgenauigkeit gefährden. Vorzugsweise wird der Folienabschnitt aus PMMA-Material auf Folienoberflächentemperatur im Bereich von 135°C bis 145 °C erwärmt. Besonders bevorzugt ist hier eine Folienoberflächentemperatur von etwa 140 °C. Eine Folienoberflächentemperatur von etwa 140 °C ist für die typischen üblichen PMMA-Folien ausreichend und liefert gute Ergebnisse.

Vorteilhafte Ausgestaltungen und Weiterbildungen des erfmdungsgemäßen Verfahrens ergeben sich aus den Unteransprüchen und/oder sind vorangehend und im Folgenden beschrieben.

Der zur vorliegenden Anmeldung benannte Erfinder hat umfangreiche Untersuchungen und Versuche durchgeführt, um die oben genannte Aufgabe zu lösen. Hierbei zeigte sich: Die an den, nach dem bekannten HPF-Verfahren tiefgezogenen, Folienteilen auftretenden, Rückstellkräfte beruhen auf inneren Spannungen, die bei der Herstellung der Folie. durch Extrudieren und beim nachfolgenden Kalandern, erzeugt werden, und die bei der späteren, unterhalb der Erweichungstemperatur erfolgenden Hochdruckumformung nicht ausreichend abgebaut und ausgeglichen wurden. Der Erfinder hat eine ebene unbedruckte, an einem Rahmen gehaltene 300 µm dicke PC-Folie (Makrofol® aus Makrolon® von BAYER MATERIALSCIENCE AG) allmählich über die Vicat-Erweichungstemperatur B/50 von 145°C hinaus erwärmt. Die Messung der Folientemperatur erfolgte anhand der Folienoberflächentemperatur mit Hilfe einer Wärmebildkamera. Es erfolgt eine Flächenzunahme, je in Laufrichtung und in Querrichtung; entsprechend dem linearen thermischen Längenausdehnungs-koeffizienten (etwa 70 x 10-6 K-1). Bei einer Folienoberflächentemperatur von etwa 170 °C wird die vorher ebene Folie sichtbar wellig, vermutlich weil vorher eingefrorene, vom Herstellungsprozess herrührende mechanische Spannungen nunmehr freigesetzt werden und die Folie verformen. Beim weiteren Erwärmen verschwindet diese Welligkeit. Bei Erreichung einer Folienoberflächentemperatur von etwa 190 °C hängt die Folie eben und offensichtlich spannungsfrei an dem Rahmen. Die gesamte Folie ist noch nicht fließfähig plastisch und hängt im nicht vom Rahmen abgestützten Zentrum nicht sichtbar durch. Dieser Zustand bleibt wenigstens etwa 4 bis 5 sec lang unverändert erhalten. Wird die Folie jedoch länger als etwa 10 sec bei dieser Folienoberflächentemperatur von etwa 190 °C gehalten, so beginnt die Folie im nicht vom Rahmen abgestützten Zentrum unter ihrem eigenen Gewicht sichtbar durchzuhängen. Offensichtlich ist nunmehr auch der Kernbereich auf diese Temperatur erwärmt und beginnt plastisch zu werden. Wird beim schnellen Aufheizen mit Hilfe von Heizstrahlern eine Folienoberflächentemperatur von etwa 220 °C erreicht, so beginnt die Folie im nicht vom Rahmen abgestützten Zentrum sichtbar durchzuhängen. Offensichtlich ist der Fließübergangsbereich erreicht, und die Reißfestigkeit hat soweit abgenommen, dass die Struktur und Gestalt der ursprünglichen Folie nicht länger erhalten bleibt. Bei Temperaturen im Fließübergangsbereich nimmt die mechanische Festigkeit, etwa bestimmt am Schubmodul G des Folienmaterials rasch ab, und die Höchstdruckverformung bzw. das High Pressure Forming bzw. HPF-Verfahren ist mangels ausreichender Festigkeit des Folienmaterials nicht länger möglich.

Aus alledem folgt: Das bekannte High Pressure Forming bzw. HPF-Verfahren kann offensichtlich bei einer wesentlich höheren Folientemperatur durchgeführt werden, als bislang angenommen, nämlich bei einer Folienoberflächentemperatur deutlich höher, als die Vicat-Erweichunqstemperatur B/50 des jeweiligen Folienmaterials. Hierbei erscheint es zweckmäßig, die Verweildauer der Folie bei der erfindungsgemäß vorgesehenen Folienoberflächentemperatur möglichst kurz zu halten, also das Folienstück nach erstmaliger Erreichung der erfindungsgemäß vorgesehenen Folienoberflächentemperatur, innerhalb einer Zeitspanne kleiner als 10 sec. bevorzugt kleiner als 5 sec, besonders bevorzugt kleiner als 2 sec in die Verformungszone zu bringen und dort sofort eine schlagartige Umformung durchzuführen. Hierdurch wird bei der Erwärmung in einer mit Heizstrahlern bestückten Heizzone eine Erwärmung des Folienabschnitts über die vorgesehene Folienoberflächentemperatur hinaus verhindert, und der Kernbereich der Folie verbleibt bei einer Kernbereichstemperatur unterhalb dieser erfindungsgemäß vorgesehenen Folienoberflächentemperatur. Dies verbessert die Abbildungsgenauigkeit irgendeiner graphischen, funktionalen und/oder dekorativen Gestaltung auf der Folienoberfläche bei der nachfolgenden Umformung.

Auf der Basis dieser Ergebnisse ist das nicht erfindungsgemäße Verfahren entwickelt worden. In ganz besonders bevorzugten Ausführungsformen des nicht erfindungsgemäßen Verfahren werden handelsüblich zugängliche Folien aus PC, wie etwa verschiedene Makrofol®-Varianten, vorzugsweise solchen basierend auf 2,2-Bis-(4-hydroxyphenyl)-propan (Bisphenol A) als Dihydroxyarylverbindung, vorzugsweise auf eine Folienoberflächentemperatur im Bereich von 20 bis 65 °C, bevorzugt 30 bis 60 °C oberhalb, besonders bevorzugt 35 bis 60 °C oberhalb der Vicat-Erweichungstemperatur B/50, ganz besonders bevorzugt von 180 °C bis 200 °C erwärmt, wobei einzelne Folienstücksegmente auch noch auf eine erhöhte Temperatur erwärmt werden können, welche diese Folienoberflächentemperatur um wenigstens 3 °C und um nicht mehr als 10 °C übersteigt, und mit dieser Folientemperatur unter den Bedingungen des HPF-Verfahrens umgeformt.

Hierbei werden formstabile Folientiefziehteile erhalten, die frei von irgendwelchen Rückstellkräften sind. Diese Produkte können in einlagiger, nicht weiter verstärkter Form oder in der Form von hinterspritzten Formkörpern als Display- und Instrumentenabdeckungen verwendet werden.

In gleicher Weise werden in weiteren ganz besonders bevorzugten Ausführungsformen des erfindungsgemäßen Verfahren handelsüblich zugängliche Folien aus PMMA, wie etwa verschiedene Arten der Plexiglas® Folien und Folien aus anderen PMMA-Varianten auf eine Folienoberflächentemperatur im Bereich von 20 bis 65°C, bevorzugt 25 bis 50 °C oberhalb der Vicat-Erweichungstemperatur B/50, ganz besonders bevorzugt von 130 °C bis 150 °C erwärmt, wobei einzelne Folienstücksegmente auch noch auf eine erhöhte Temperatur erwärmt werden können, welche diese Folienoberflächentemperatur um wenigstens 3°C und um nicht mehrals 10 °C übersteigt, und mit dieser Folientemperatur unter den Bedingungen des HPF-Verfahrens umgeformt. Hierbei werden formstabile Folientiefziehteile erhalten, die frei von irgendwelchen Rückstellkräften sind. Diese Produkte können in einlagiger, nicht weiter verstärkter Form oder in der Form von hinterspritzten Formkörpern als Display-und Instrumentenabdeckungen verwendet werden.

Nachfolgend wird das erfindungsgemäße Verfahren mehr im Einzelnen erläutert.

Als Polycarbonate (PC) zur nicht erfindungsgemäßen Herstellung von Folientiefziehteilen kommen die bekannten und handelsüblich zugänglichen PC-Folien in Betracht. Hierbei handelt es sich typischerweise um Polyester der Kohlensäure mit aromatischen Dihydroxykomponenten, insbesondere auf der Basis von Bisphenol A und dessen Derivaten. Gut geeignet sind hier ausgewählte Makrofol®-Folien (aus Makrolon® von BAYER MATERIAL SCIENCE AG). Makrolon® auf der Basis von Bisphenol A hat eine Glasübergangstemperatur von 145 °C, eine Vicat-Erweichungstemperatur B/50 (50 N; 50 °C/h; nach ISO 306) von etwa 144 bis 146 °C und weist eine Wärmeformbeständigkeit unter einer Last von 0,45 MPa (nach ISO 75-1, -2) von etwa 137 °C auf. Für die Anwendung in ganz besonders bevorzugten Ausführungsformen des nicht erfindungsgemäßen Verfahren besonders gut geeignet sind die Makrofol®-Folien Makrofol® DE, hier vorzugsweise einseitig mattiert, und die Streulichtfolie Makrofol® BL.

Typischerweise werden diese Folien im Dickenbereich von 100 µm bis 2.000 µm, vorzugsweise im Dickenbereich von 125 bis 750 µm, besonders bevorzugt im Dickenbereich von 125 bis 600 µm und ganz besonders bevorzugt im Dickenbereich von 200 bis 500 µm eingesetzt.

Als Polymethylmethacrylate bzw. Poly(meth)acrylate (PMMA) zur erfindungsgemäßen Herstellung von Folientiefziehteilen in weiteren ganz besonders bevorzugten Ausführungsformen des erfindungsgemäßen Verfahren kommen die bekannten und handelsüblich zugänglichen Folien aus PMMA und aus modifizierten, insbesondere schlagzähmodifizierten PMMA-Varianten [Poly(meth)acrylate] in Betracht. Gut geeignet sind hier extrudierte und gewalzte Plexiglas®-Folien (Warenzeichen der Röhm GmbH & Co. KG, Darmstadt, Deutschland), die unter der Handelsbezeichnung Plexiglas® XT (XT steht für extrudiert) vertrieben werden. Plexiglas® XT hat eine Glasübergangstemperatur von 110 °C, eine Vicat-Erweichungstemperatur B/50 (nach ISO 306) von 103 °C und weist unter einer Last von 0,45 MPa eine Wärmeformbeständigkeit B (nach ISO 75 HDT/B) von 100 °C auf. Für die Anwendung beim erfindungsgemäßen Verfahren besonders gut geeignet sind die Plexiglas®-Folien Plexiglas®-Folie 99524 und Plexiglas®-Folie 99526.

Für PMMA-Folien aus schlagzähmodifiziertem PMMA kommen beispielsweise Poly(meth)acrylate in Betracht, die zu 80 bis 99,9 Gew.-% aus Methylmethacrylat und zu 0,1 bis 20 Gew.-% aus weiteren Comonomere bestehen. Geeignete Comonomere sind z.B. Ester der Methacrylsäure (z.B. Ethylmethacrylat, Butylmethacrylat, Hexylmethacrylat, Cyclohexylmethacrylat). Ester der Acrylsäure (z.B. Methylacrylat, Ethylacrylat, Butylacrylat, Hexylacrylat, Cyclohexylacrylat) oder Styrol und Styrolderivate, wie beispielsweise α-Methylstyrol oder p-Methylstyrol. Schlagzähmodifizierungsmittel für Polymethacrylat-Kunststoffe sind hinlänglich bekannt. Als Schlagzähmodifizierer für die Poly(meth)acrylate können vernetzte ein-oder mehrschalige Emulsionspolymerisate, eingesetzt werden, die z.B. aus vernetzten Polybutylacetat bestehen. Auch derartige schlagzähmodifizierte PMMA-Folien sind handelsüblich zugänglich.

Typischerweise werden auch diese PMMA-Folien im Dickenbereich von 100 µm bis 2000 µm, vorzugsweise im Dickenbereich von 125 µm bis 600 µm, und besonders bevorzugt im Dickenbereich von 200 µm bis 500 µm eingesetzt.

Weil nach dem erfindungsgemäßen Verfahren bereits aus einlagigen Folien formstabile Folientiefziehteile erhalten werden, werden vorzugsweise einlagige Folien der vorstehend beschriebenen Art eingesetzt. "Einlagig" bezieht sich hier allein auf die Folie bzw. den Folienkörper und schließt zusätzliche aufgebrachte Schichten und Beläge aus anderen Materialien nicht ein. "Einlagig" umfasst zudem die vorangehend beschriebenen mehrschichtigen Koextrusionsfolien, welche als einlagige hergestellt und in das Verfahren eingesetzt werden, sowie die Laminat-Folien, welche ebenfalls als Gesamtfolie im Sinne von "einlagig" in das Verfahren eingesetzt werden. Eine "einlagige Folie" kann folglich bedruckt, metallisiert und/oder sonst wie beschichtet sein, wobei sonst wie beschichtet beispielsweise auch Aufbringung wenigstens einer weiteren Schicht mittels Verkleben und/oder Laminierung umfasst ohne darauf beschränkt zu sein. Wenigstens eine solche mittels Verkleben und/oder Laminierung aufgebrachte weitere Schicht kann auch eine solche aus einem nicht thermoplastischen Material sein. Diese einlagigen Folien sind wenigstens teilweise bedruckt, metallisiert und/oder sonst wie beschichtet worden, bevor das erfindungsgemäße High Pressure Forming bei erhöhter Folienoberflächentemperatur durchgeführt wird. Die Folien können beispielsweise auch mit einer verformbaren Schutzschicht, wie z.B. einer verformbaren Kratzfestbeschichtung, oder verformbaren haptischen Effektschicht, wie z.B. einer verformbaren Soft-Touch-Beschichtung (vgl. EP-A 1647399), beschichtet worden sein, bevor das erfmdungsgemäße High Pressure Forming bei erhöhter Folienoberflächentemperatur durchgeführt wird.

Das erfindungsgemäß erhältliche, dreidimensional verformte Tiefziehteil ist beispielsweise mit einer, einem vorgegebenem Layout folgenden grafischen, funktionalen und/oder dekorativen Gestaltung versehen, die typischerweise als Hintergrund auf die Rückseite einer transparenten Folie aufgebracht ist, beispielsweise als Bedruckung, Metallisierung und/oder sonstige Beschichtungen und durch die Folienschicht hindurch wahrnehmbar ist. Daher werden vorzugsweise transparente Folienmaterialien eingesetzt. Auch eine transparente Folie kann an der zur Bedruckung, Metallisierung und/oder sonstige Beschichtung gegenüberliegende Oberfläche mit einer Oberflächenmattierung oder mit einer Streulackschicht versehen sein.

Das erfindungsgemäße Verfahren ist besonders gut geeignet zur Erzeugung der am Armaturenbrett eines Kraftfahrzeugs vorgesehenen, ortsfesten Skalen, Skalenteile und Anzeigemittel der dort vorgesehenen Instrumente und Display-Einrichtungen, sowie weitere Symbole, Bilder und Piktogramme, die im Bedarfsfalle von auftreffendem oder durchscheinendem Licht beleuchtet werden und so eine optisch wahrnehmbare Anzeige liefern. Zu diesen Instrumenten gehört die Fahrzeugsgeschwindigkeitsanzeige, bzw. der Tachometer, dessen Anzeigeelemente häufig eine erhabene, ringförmige Anordnung mit Skalenstrichen aufweist, denen die Geschwindigkeit anzeigende Ziffern zugeordnet sind. Ein zentral angeordneter, verschwenkbarer Zeiger wird anhand der aktuellen Fahrzeuggeschwindigkeit auf einen bestimmten Skalenstrich hin ausgerichtet, um so anhand der zugeordneten Ziffer die aktuelle Fahrzeuggeschwindigkeit (km/h bzw. mph) anzuzeigen. Aufgrund dieser ringförmigen, zifferblattartigen Anordnung wird hier auch von Tachoscheiben gesprochen. In ähnlicher Weise ist das Anzeigeelement zur Anzeige der Umdrehungszahl des Motors ausgebildet; hier erfolgt typischerweise eine Anzeige in Ziffern x 100 pro Min. Ähnlich ausgebildete Anzeigemittel mit erhabener, halbkreisförmiger Ringstruktur dienen zur Anzeige der Tankfüllung und des Öldrucks im Motorraum. Anstelle der erhabenen ringförmigen Strukturen können diese Anzeigeelemente auch an ringförmigen Flächensegmenten angebracht sein, die gegenüber der Hauptebene kegelstumpfförmig (bei großen Kegelwinkeln von 160° und mehr) abfallen. Zusätzlich können häufig erhabene metallisierte Stege und andere Zierelemente vorgesehen sein. Ein beispielhaftes, erfindungsgemäß erzeugtes Produkt ist für ein Kombinationsinstrument vorgesehen und weist mittig einen transparenten Abschnitt für ein Navigationsdisplay, rechts davon eine Tachoscheibe und links davon die Drehzahlanzeige auf.

Die zu diesen Anzeigeelementen gehörenden Skalenstriche. Ziffern, Beschriftungen, Symbole, Bilder, Piktogramme und dergleichen werden auf einer Oberfläche der anfänglich ebenen Folie aufgebracht; dies kann beispielsweise in einem mehrstufigen Siebdruckverfahren und/oder durch Aufbringung eines Coatings erfolgen, das in mehreren aufeinander folgenden Schritten je in flüssiger Schicht aufgetragen wird. Für diese alternative Aufbringung bietet sich beispielsweise Offsetdruck, Tiefdruck, Transferdruck oder Digitaldruck an. Vorzugsweise wird diese, einen vorgegebenen Layout folgende Bedruckung durch Siebdruck aufgetragen. Beim mehrstufigen Siebdruckverfahren wird häufig anfänglich zuerst eine schwarze Farbschicht aufgetragen, bei der im Negativdruck die später sichtbaren Skalenstricke, Ziffern, Beschriftungen, Symbole, Bilder, Piktogramme und dergleichen ausgespart sind; in späteren Druckschritten werden diese ausgesparten Stellen mit verschieden gefärbten Farbschichten hinterlegt.

Zum Auftragen dieser Farbschichten dienen typischerweise Farblacke auf der Basis von Polycarbonat oder Polyesterpolyurethan. Hochtemperaturbeständige flexible Druckfarben zum Bedrucken von Kunststoff-Folien, die ausdrücklich den Bedingungen des hier vorgesehenen Höchstdruckverfahrens und gegebenenfalls einem nachfolgenden Insert Moulding standhalten, sind beispielsweise in dem Dokument DE 198 32 570 C2 beschrieben. Das Dokument DE 101 51 281 A1 beschreibt Farblacke, die besonders gut für die Siebbedruckung von PMMA-Folien geeignet sind, und den Bedingungen der Höchstdruck-Umformung sowie möglicherweise einem nachfolgenden Insert Moulding standhalten. Speziell für diese Anwendungen geeignete flüssige Siebdruckverfahren werden beispielsweise handelsüblich von der Fa. PRÖLL KG, 91781 Weißenburg. Deutschland vertrieben.

Dickere Metallschichten und Metallisierungen können ebenfalls im Siebdruckverfahren aufgebracht werden. Dünnere Metallschichten mit Schichtdicken von 5 nm bis 250 nm, insbesondere von 15 nm bis 60 nm, die einerseits metallischen Glanz verleihen und andererseits lichtdurchlässig sind können mit Hilfe von Physical Vapor Deposition (PVD) oder Chemical Vapor Deposition (CVD) oder mit Hilfe einer geeigneten Kombination dieser Verfahren aufgebracht werden. Die zur Erzeugung bestimmter Funktionen (etwa elektrische Kontaktierung) oder für bestimmte graphische oder dekorative Gestaltungsmuster nicht gewünschten, überflüssigen Metallschichtabschnitte können durch Laserbehandlung entfernt werden. Zu geeigneten Metallen gehören hier beispielsweise Aluminium, Titan, Chrom, Kupfer, Gold, Silber, Molybdän, Indium und Iridium sowie Metalllegierungen, wie z.B. Indium-, Zinn- oder KupferLegierungen, vorzugsweise Indium-Zinn-Legierungen, besonders bevorzugt Indium-Zinn-KupferLegierungen (vgl. z.B. US-A 2008/0020210).

Auf die Metallschichten kann weiterhin wenigstens eine weitere Schicht aus einer oder mehreren elektrolumineszenten Verbindungen aufgebracht sein. Solche elektrolumineszenten Verbindungen sind dem Fachmann bekannt (vgl. z.B. EP-A 1 647 399). Als elektrolumineszente Verbindung kann beispielsweise Zinksulfid, welches mit Silber oder Kupfer dotiert ist, eingesetzt werden.

Weiterhin können an dem zu verformenden Folienstück auch transparente Abschnitte verbleiben, in denen später das Display irgendwelcher Flüssigkristallanzeigen sichtbar wird. Auf der anderen, zu den Farbschichten gegenüber befindlichen Oberfläche wird häufig ein farbloser Strukturlack aufgetragen, der dem fertigen Produkt eine matte, nicht-spiegelnde Oberfläche verleiht. Nach der für den Einsatzzweck vorgesehenen, bestimmten Anordnung des Tiefziehteils wird sich - je aus der Sicht des Betrachters - die Strukturlackschicht an der Vorderseite des Tiefziehteils befinden, und die Farbschichten der grafischen Gestaltung werden sich an der Rückseite des Tiefziehteils befinden.

Eine bevorzugte Ausführungsform des erfindungsgemäßen Verfahrens bezieht sich auf die Herstellung von Tachoscheiben und/oder Drehzahlmesserscheiben, welche die vorstehend erläuterte graphische, funktionale und gegebenenfalls dekorative Ausgestaltung aufweisen. Zur Herstellung solcher Tachoscheiben bzw. Drehzahlmesserscheiben werden transparente Folienstücke bereitgestellt und erfindungsgemäß umgeformt, die entsprechend einem vorgegeben Layout für Tachoscheiben bzw. Drehzahlmesserscheiben bedruckt, metallisiert und/oder sonst wie beschichtet worden sind.

Eine ebene Folie, die auf der einen Oberfläche mit der vorstehend erläuterten, mehrschichtigen grafischen, funktionalen und/oder dekorativen Gestaltung versehen ist, und die auf der anderen Oberfläche eine Schicht aus farblosem Strukturlackaufweisen kann, wird mit Hilfe des erfindungsgemäßen Verfahrens zu einem dauerhaft dreidimensional verformten und formstabilen Tiefziehteil umgeformt. Hierbei verlangen die Abnehmer solcher Tiefziehteile eine extrem genaue Positionierung der grafischen, funktionalen und/oder dekorativen Gestaltung am fertigen Tiefziehteil. Die Abweichungen zwischen dieser Gestaltung an der ursprünglich ebenen Folie und der entsprechenden Gestaltung am fertigen Tiefziehteil betragen vorzugsweise nicht mehr als ± 0,1 mm.

Die vorstehend genannten, wenigstens teilweise bedruckten, metallisierten und/oder sonst wie beschichteten Folien werden beim erfindungsgemäßen Verfahren in Form einzelner, zurecht geschnittener Folienstücke eingesetzt. Für solche vorzugsweise rechteckigen, kleineren Folienstücke können beispielsweise Abmessungen mit einer Länge von 160 mm bis 450 mm und mit einer Breite von 160 mm bis 305 mm vorgesehen werden. Folienstücke dieser Flächengröße lassen sich besonders leicht mit Hilfe handelsüblich zugänglicher Apparate (etwa Fa. HDVF KUNSTSTOFF-MASCHINEN GMBH, 82377 Penzberg, Deutschland) zu den hier angestrebten Folientiefziehteilen verarbeiten. Größere Folienstücke können typischerweise eine Länge bis maximal 1.200 mm und eine Breite bis maximal 700 mm aufweisen.

Je nach Größe des fertigen Tiefziehteils und dem zur Verfügung stehenden Fertigungsautomaten kann eine Mehr-Nutzen-Arbeitsweise vorgesehen werden. Für hochwertige Tachoscheiben und ähnliche Displayabdeckungen wird vorzugsweise mit Ein-Nutzen-Foliengrößen gearbeitet, weil hier mit der Ein-Nutzen-Arbeitsweise eine höhere Abbildungsgenauigkeit erzielt werden kann.

Zur erfindungsgemäßen Verarbeitung wird das ebene Folienstück in definierter Anordnung auf einem rahmenartigen Träger, einer rahmenartigen Palette oder dergleichen angebracht, der/die nachstehend kurz als Rahmen bezeichnet wird.. Gut geeignet ist ein Rahmen mit einer Stegbreite von 50 mm bis 100 mm. Die randseitigen Abschnitte des Folienstücks liegen typischerweise mit einer Breite von 20 mm bis 30 mm auf diesen, den Rahmen bildenden Stegen auf. Für die definierte Anordnung sorgen kreisrunde-Positionierstifte, die von den Stegen abstehen und in Langlöcher eingreifen, welche in den Folienstück-Randabschnitten ausgespart sind. Langlöcher tragen der Flächenzunahme des Folienstücks bei der Erwärmung auf die erfindungsgemäß vorgesehene Folienoberflächentemperatur Rechnung.

Das auf einem solchen Rahmen gehaltene Folienstück wird in eine Heizzone eingebracht und dort auf die Folienoberflächentemperatur erwärmt. Für diese Erwärmung können die üblichen und bekannten Erwärmungsmaßnahmen vorgesehen werden, wie etwa Konvektions-Heizung mit Hilfe von Heißluft oder Heizflüssigkeit bzw. Wärmebad als Wärmequelle oder Strahlungsheizung beispielsweise mit Hilfe von Infrarotstrahlung oder Quarzstrahlern. Erwärmungsmaßnahmen zum berührungslosen Erwärmen sind im Rahmen der Erfindung bevorzugt; Strahlungsheizung mit Hilfe von Infrarotstrahlung ist besonders bevorzugt. Weniger erwünscht ist die Hochfrequenz-Heizung, weil hier auch der Kernbereich auf die Oberflächentemperatur der Folie erwärmt wird. Vorzugsweise ist eine Heizzone vorgesehen, die zwei, flächengleiche, horizontal ausgerichtete und im Abstand zueinander sowie miteinander fluchtend angeordnete Heizfelder aufweist. Das auf dem Rahmen gehaltene Folienstück wird eine Zeit lang mittig zwischen und im gleichen Abstand zu den beiden Heizfeldern gehalten. Typischerweise hat jedes Heizfeld eine größere Fläche, als die miteinander fluchtende Anordnung aus Rahmen und Folienstück. Beispielsweise kann für ein Folienstück mit Abmessungen von 450 mm x 250 mm ein Heizfeld mit Abmessungen von 486 mm x 455 mm vorgesehen werden, um auch die randständigen Bereiche des Folienabschnitts innerhalb des Rahmens, die nicht auf dem Rahmen aufliegen, sicher auf die vorgesehene FolienoberflächenTemperatur zu erwärmen.

Jedes Heizfeld besteht aus einer Anzahl aneinandergrenzender und individuell ansteuerbarer Infrarot-Flächenstrahler oder Quarzstrahlem. Um eine - nachstehend noch im Einzelnen erläuterte - vorzugsweise vorgesehene, differenzielle Erwärmung einzelner Folienstücksegmente am Folienabschnitt vornehmen zu können, werden vorzugsweise möglichst kleinformatige Infrarot-Flächenstrahler oder Quarzstrahler eingesetzt. Gut geeignet sind hier beispielsweise Vollkeramik-Strahler mit Abmessungen von 60 mm x 60 mm, die bei einer Leistungsaufnahme von 125 W eine Oberflächentemperatur von angenähert 300 °C annehmen. Infrarot-Flächenstrahler dieser Art werden beispielsweise von Fa. FRIEDRICH FREEK GMBH, 58708 Menden. Deutschland angeboten und vertrieben.

Typischerweise ist ein Abstand zwischen der einen Strahleroberfläche und der anderen, gegenüber befindlichen Strahleroberfläche von etwa 50 mm bis 100 mm vorgesehen. Hier durch wird der von den jeweiligen, aneinander grenzenden Randbereichen benachbarter Infrarot-Flächenstrahler oder Quarzstrahler ausgehenden Wärmestrahlung erreicht. Die Auswirkungen der Flächenstrahlergrenzen werden minimiert, und es wird eine gleichmäßige Temperaturverteilung an der Folienoberfläche erreicht.

Für das erfindungsgemäße Verfahren gut geeignet und vorzugsweise vorgesehen sind Heizfelder, die in Folienvorschubrichtung eine Anordnung aus 7 Reihen Vollkeramik-Strahlern dieser Art, sowie in Querrichtung eine Anordnung aus 6 Reihen Vollkeramik-Strahlern dieser Art aufweisen. Damit kann ein einzelnes Heizfeld aus 42 Vollkeramik-Strahlern dieser Art aufgebaut sein.

Die mittlere Heizfeld-Oberflächentemperatur wird bei etwa 300 °C gehalten. Damit kann eine Grobsteuerung der Folienoberflächentemperatur über die Verweildauer eines gegebenen Folienstücks in der Heizzone erfolgen. Typischerweise wird das zu erwärmende Folienstück - je nach Schichtdicke - etwa 4 sec bis 12 sec lang in einer solchen Heizzone gehalten. Beispielsweise wird ein 300 µm dickes, Umgebungstemperatur (etwa 20°C) aufweisendes PC-Folienstück in einer Heizzone der vorstehend beschriebenen Art innerhalb einer Zeitspanne von etwa 6 sec auf die erfindungsgemäß vorgesehene Folienoberflächentemperatur von etwa 190°C aufgeheizt.

Jeder Infrarot-Flächenstrahler oder Quarzstrahler dieser Art ist individuell ansteuerbar. Die Ansteuerung erfolgt über die elektrische Leistungsaufnahme. Eine höhere Leistungsaufnahme erzeugt eine höhere Oberflächentemperatur an einem gegebenen Infrarot-Flächenstrahler oder Quarzstrahler. Damit kann zusätzlich über die Steuerung der Leistungsaufnahme der einzelnen Infrarot-Flächenstrahler oder Quarzstrahler eine Feinsteuerung der Temperaturverteilung an der Oberfläche einzelner Folienstücksegmente erfolgen, die je einem bestimmten Infrarot-Flächenstrahler oder Quarzstrahler zugeordnet sind. Die Wirkung dieser Feinsteuerung ist umso größer, je niedriger die mittlere Oberflächentemperatur ist. Deshalb wird erfindungsgemäß die Erwärmung des Folienstücks in einer solchen Heizzone durchgeführt, die von zwei, miteinander fluchtenden Heizfeldern begrenzt ist, die je eine mittlere Heizfeld-Oberflächentemperatur von etwa 300 °C aufweisen.

Um optimale Ergebnisse zu erzielen, erfordert das erfindungsgemäße Verfahren eine vergleichsweise genaue Steuerung und Kontrolle der Folienoberflächentemperatur am Folienabschnitt. Nach einer weiteren bevorzugten Ausführungsform des erfindungsgemäßen Verfahrens ist deshalb eine Erfassung der Oberflächentemperatur vorgesehen, auf welche der Folienabschnitt in der Heizzone erwärmt worden ist.

Diese weitere, bevorzugte Ausgestaltung des erfindungsgemäßen Verfahrens ist dadurch gekennzeichnet, dass das Folienstück zur Erwärmung der Heizzone eine Zeitspanne lang im Abstand zu wenigstens einem, aus einer Anzahl individuell ansteuerbarer Infrarot-Flächenstrahler oder Quarzstrahler aufgebauten, Heizfeld gehalten wird; und das so erwärmte Folienstück auf dem Weg von der Heizzone zur Verformungszone eine Temperaturmess-Station passiert, in der mit Hilfe einer Wärmebildkammer die Temperaturverteilung an einer Folienoberfläche abgetastet, sichtbar gemacht und/oder auf sonstige Weise dargestellt wird.

Zudem kann eine differenzielle Erwärmung vorgenommen werden, wozu jeder einzelne Infrarot-Flächenstrahler oder Quarzstrahler individuell so angesteuert wird,
- um die aus der Temperaturverteilung ersichtlichen Temperaturunterschiede am Folienabschnitt zu minimieren, und
- um wenigstens eine Seite des überwiegenden Folienabschnitts auf eine Folienoberflächentemperatur im oben genannten Bereich für das jeweilige Folienmaterial zu erwärmen, und
- um wahlweise einzelne ausgewählte Folienstücksegmente auf eine höhere Temperatur zu erwärmen, welche diese Folienoberflächentemperatur um wenigstens 3 °C und um nicht mehr als 10 °C übersteigt.

Mit dieser Ausgestaltung des erfindungsgemäßen Verfahrens werden nachstehende Vorteile erzielt:

Keramikinfrarotstrahler dieser Art emittieren ihre Wärmestrahlung im Wellenlängenbereich von 2,5 bis 10 µm. Die Erwärmung der Folie hängt vom Absorptionsvermögen und vom Reflexionsverhalten in diesem Wellenlängenbereich ab. Insbesondere die auf dem hier maßgeblichen Folienabschnitt befindliche, den späteren Verwendungszweck bestimmende Bedruckung, Metallisierung und/oder sonstige Beschichtung beeinflusst dieses Absorptionsvermögen und Reflexionsverhalten. Ein dunkler bis schwarzer Beschichtungsabschnitt verstärkt dort die Wärmeaufnahme. Ein transparentes Fenster am Folienabschnitt oder ein heller Beschichtungsabschnitt vermindern die Wärmeaufnahme. Besonders stark vermindert eine metallische Beschichtung, hier etwa Al, Ti oder Cr die Wärmeaufnahme. Die in einer gegebenen Anordnung mit gegebenen Infrarot-Flächenstrahlern erzielbare Folienoberflächentemperatur hängt damit auch von der Art und Größe der Bedruckung, Metallisierung und/oder sonstigen Beschichtung des Folienabschnitts ab. Für eine genaue Steuerung und Kontrolle der Folientemperatur ist es deshalb wünschenswert, die Temperatur an der Folienoberfläche zu erfassen und darzustellen. Dies kann mit dieser bevorzugten Arbeitsweise erreicht werden.

Für ein gegebenes Tiefziehteil, beispielsweise eine Instrumentenabdeckung mit einem rechts angeordneten Tacho, einem links angeordneten Drehzahlmesser und einem mittig angeordneten Navigationsdisplay müssen unterschiedliche Segmente des Folienabschnitts unterschiedlich stark verformt werden. Typischerweise benötigen stärkere geometrische Verformungen eine höhere Flexibilisierung des jeweiligen Folienstücksegmentes, die mit einer örtlich höheren Erwärmung des oder der betroffenen Folienstücksegmente(s) erzielt werden kann, im vorliegenden Beispiel etwa für die partiellen Außenbereiche für Tacho und Drehzahlmesser. In dem gering zu verformenden Mittenbereichen, etwa für das Navigationsdisplay, kann durch eine geringere Temperierung das Schwindungsverhalten reduziert, und damit die Toleranz des gesamten Zifferblattes verbessert werden. Auch eine exakte Abformung scharfkantiger Konturen und/oder die passgenaue Wiedergabe feiner Prägungen und Ziselierungen, die gegebenenfalls mit kleinen Durchbrüchen versehen sein können, kann eine stärkere Flexibilisierung eines gegebenen Folienstücksegmentes gegenüber dem umgebenden Folienmaterial möglich machen. Folglich kann auch das örtlich unterschiedliche Ausmaß der Verformung einzelner Folienstücksegmente eine örtlich unterschiedliche Erwärmung einzelner Folienstücksegmente erfordern, was mit Hilfe einer Erfassung der Oberflächentemperatur in den einzelnen Folienstücksegmenten und entsprechender Ansteuerung der gerade diese Folienstücksegmente erwärmenden Infrarot-Flächenstrahler gewährleistet werden kann.

Schließlich kann durch entsprechende Ansteuerung und Einstellung unterschiedlicher Heiztemperaturen an verschiedenen einzelnen Infrarot-Flächenstrahlern ein "Verschieben" des aufgedruckten Musters oder Layouts an dem Folienabschnitt erzielt werden. In solchen Folienstücksegmenten, die auf eine mäßig höhere Temperatur erwärmt werden, als die reguläre, einheitliche Folienoberflächentemperatur, erfolgt eine stärkere Längenausdehnung gegenüber solchen Folienstücksegmenten, die nur auf die reguläre einheitliche Folienoberflächentemperatur erwärmt werden. Die sich stärker ausdehnende Seite (weil höher temperiert) verschiebt das aufgedruckte Muster oder Layout zur geringer ausdehnenden, weil kühleren Seite, Auf diese Weise können druckbedingte Positionsabweichungen zwischen 0,1 mm und 1,5 mm noch während des Verformungsprozesses korrigiert werden. Auch diese Maßnahme erfordert eine genaue Kenntnis der Temperaturverteilung an der Oberfläche des erwärmten Folienabschnitts, um gezielt solche Infrarot-Flächenstrahler ansteuern zu können, die einzelne Folienstücksegmente auf eine höhere Temperatur erwärmen sollen, als die reguläre einheitliche Folienoberflächentemperatur.

Nach einer weiteren Ausgestaltung des erfindungsgemäßen Verfahrens, erfolgt deshalb eine Erwärmung einzelner Folienstücksegmente auf reine höhere Temperatur, als die reguläre einheitliche Folienoberflächentemperatur in solchen ausgewählten Folienstücksegmenten, in denen eine höhere Flexibilisierung des Folienmaterials erreicht werden soll. Insbesondere können hier solche Folienstücksegmente ausgewählt werden, in denen eine besonders starke Umformung der ursprünglich ebenen Folien erfolgen soll.

Weiterhin kann diese höhere Flexibilisierung wegen der exakten Abformung scharfkantiger Konturen und/oder wegen der passgenauen Wiedergabe besonders feinteiliger Prägungen und/oder Ziselierungen sowie zur Korrektur druckbedingter Positionsabweichungen wünschenswert sein. In diesem Falle werden solche Folienstücksegmente für die Erwärmung auf die erhöhte Temperatur ausgewählt, in denen eine exakte Abformung scharfkantiger Konturen, eine passgenaue Wiedergabe besonders feinteiliger Prägungen und/oder Ziselierungen, sowie eine Korrektur druckbedingter Positionsabweichungen erreicht werden soll.

Im Hinblick auf die hier in Frage kommenden Temperaturen oberhalb der Vicat-Erweichungstemperatur B/50, in besonders bevorzugten Ausführungsformen um etwa 140°C für die Tiefziehteile aus Polymethylmethacrylat bzw. Poly(meth)acrylat (PMMA) kommt als Wärmebildkamera typischerweise eine Infrarot-Linienkamera in Betracht, die für den Temperaturbereich 0 °C bis 400 °C ausgelegt ist und Temperaturstrahlung im Wellenbereich von 8 µm bis 14 µm erfasst und auswertet. Die Erfassung der Wärmestrahlung erfolgt mit Hilfe eines Zeilensensors der beispielsweise 128 oder 256 Messelemente aufweisen kann. Infrarot-Linienkameras dieser Art mit entsprechender Auswerteschaltung und Auswertesoftware sind handelsüblich zugänglich. Im Rahmen der vorliegenden Erfindung hat sich hier eine Infrarot-Kamera gut bewährt, die von DIAS INFRARED GMBH. 01217 Dresden, Deutschland unter der Handelsbezeichnung INFRALINE® vertrieben wird.

Die Infrarot-Kamera INFRALINE® dient zur berührungsfreien, quantitativen und weitgehend entfernungsunabhängigen Aufnahme von Temperaturverteilungen an ortsfesten und bewegten Objekten. Sie wurde für den stationären Einsatz an Industrieumgebungen entwickelt und ist für Systemlösungen zur automatisierten Prozesskontrolle und -steuerung sowie der Messdatenverarbeitung an Maschinen und Anlagen einsetzbar.

Die Kamera besteht aus einem Kamerakopf zum Betrieb notwendigen Baugruppen enthält. Aufgrund der im Allgemeinen abgesetzten Montage in der Nähe des zu überwachenden Prozesses oder zu überwachenden Objekte besitzt die Kamera keine Bedienelemente. Zur Steuerung, Überwachung und Messwertübertragung ist eine Datenschnittstelle in die Kamera integriert. In Verbindung mit einem PC kann die Programmierung und Messwertdatenerfassung erfolgen.

Zur Darstellung und Auswertung von Messdaten kann zweckmäßigerweise die von MICROSOFT INC. zur Verfügung gestellte, bekannte Visualisierungssoftware PYROSOFT® benutzt werden, die auf PCs mit MS-Windows-Betriebssystem lauffähig ist. Anhand farblicher Kodierung und/oder ziffernmäßiger Angaben kann die gemessene Temperatur mit einer Genauigkeit von 1/10 °K angezeigt werden.

Anhand der so erlangten Kenntnisse über die tatsächliche, "echte" Temperaturverteilung an der erwärmten Folienoberfläche, vorzugsweise an der Folienunterseite, können gezielt solche Infrarot-Flächenstrahler mit einer höheren elektrischen Leistungsaufnahme angesteuert werden die solche Folienstücksegmente beheizen, die bislang - beispielsweise wegen der Besonderheiten der dort befindlichen Bedruckung, Metallisierung und/oder sonstigen Beschichtung - noch nicht die vorgesehene Folienoberflächentemperatur erreicht haben, oder die anderen ausgewählten Folienstücksegmente beheizen, in denen eine erhöhte Flexibilisierung des Folienmaterials erreicht werden soll, und die deshalb auf eine höhere Temperatur als die reguläre einheitliche Folienoberflächentemperatur erwärmt werden soll.

Im Falle der beiden vorstehend erläuterten Heizfelder, die je aus 42 miteinander fluchtenden Infrarot-Flächenstrahlem aufgebaut sind, kann beispielsweise diese PYROSOFT®-Software so programmiert und ausgewertet werden, dass jedem miteinander fluchtenden Infrarot-Flächenstrahler-Paar ein Fenster oder Feld auf dem Bildschirm zugeordnet ist. Das ganze Folienstück wäre dann in 42 Folienstücksegmente aufgeteilt, und ein bestimmtes Folienstücksegment würde maßgeblich von einem bestimmten zugeordneten Infrarot-Flächenstrahler-Paar erwärmt werden. Die Farbkodierung in einem bestimmten Fenster am Bildschirm und/oder die entsprechende ziffemmäßige Temperaturangabe zeigt die Oberflächentemperatur in dem zugeordneten Folienstücksegment an, und im Falle von Korrekturbedarf könnte die elektrische Leistung verändert werden, die dem einen Infrarot-Flächenstrahler oder den beiden Infrarot-Flächenstrahlern dieses, dem bestimmten Folienstücksegment zugeordneten Infrarot-Flächenstrahler-Paares zugeführt wird.

Je nach Art und Besonderheit des herzustellenden Folientiefziehteils kann die erfindungsgemäß vorgesehene differenzielle Erwärmung des Folienabschnitts in der Weise durchgeführt werden, dass zwingend ein ausgewähltes Folienstücksegment oder mehrere ausgewählte Folienstücksegmente auf die erhöhte Temperatur erwärmt werden, welche die Folienoberflächentemperatur für das jeweilige Folienmaterial um wenigstens 3 °C und um nicht mehr als 10 °C übersteigt.

Im Rahmen der vorliegenden Erfindung ist typischerweise vorgesehen, dass nicht mehr als 20 % aller Folienstücksegmente auf die erhöhte Temperatur erwärmt werden, welche die für ein bestimmtes Folienmaterial vorgesehene Folienoberflächentemperatur um wenigstens 3 °C und um nicht mehr als 10 °C übersteigt.

Es ist nicht erforderlich, dass der Verfahrensschritt "Messung und Auswertung der Temperaturverteilung an einer Folienoberfläche" während des gesamten Produktionsverfahren zur Herstellung aller Tiefziehteile einer gegebenen Art durchgeführt wird. Häufig ist es ausreichend, wenn dieser Verfahrensschritt bei Einrichtung einer Produktion durchgeführt wird, und anschließend in regelmäßigen Abständen bzw. nach Erzeugung einer gegebenen Anzahl Tiefziehteile wiederholt wird, um die gleich bleibende einheitliche Qualität dieser Tiefziehteile zu gewährleisten und zu sichern.

Folglich ist im Rahmen der vorliegenden Erfindung auch eine Ausführungsform des erfindungsgemäßen Verfahrens, zur Herstellung einer Anzahl tiefgezogener Folienteile gleicher Art vorgesehen, bei welcher nur bei der Herstellung eines Teils aller tiefgezogenen Folienteile dieser Art der Verfahrensschritt der Messung und Auswertung der Temperaturverteilung an einer Folienoberfläche durchgeführt wird, und bei der Herstellung des restlichen Anteils der tiefgezogenen Folienteile dieser Art dieser Verfahrensschritt nicht ausgeführt wird. Häufig ist es ausreichend, wenn dieser Verfahrensschritt nur bei der Herstellung von wenigstens 20 % aller tiefgezogenen Folienteile einer gegebenen Art ausgeführt wird. Häufig ist es ausreichend, wenn dieser Verfahrensschritt nur bei der Herstellung von wenigstens 20 % aller tiefgezogenen Folienteile einer gegebenen Art ausgeführt wird.

Das Folienstück wird nach Erreichung der erfindungsgemäßen vorgesehenen Folienoberflächentemperatur rasch aus der Heizzone in die Verformungszone überführt, ohne dass eine merkliche Abkühlung des Folienstücks erfolgt. Vorzugsweise wird das Folienstück nach Erwärmung auf die je vorgesehene Folienoberflächentemperatur sofort und innerhalb einer Zeitspanne kleiner 2 sec in die Verformungszone überführt und dort sofort und schlagartig verformt. Hier werden zwei Ziele verfolgt und erreicht. Zum einen soll wenigstens eine Seite des Folienabschnitts bei dieser schlagartigen, unter hohem Druckmitteldruck erfolgenden Verformung noch im Wesentlichen die erfindungsgemäß vorgesehene Folienoberflächentemperatur aufweisen. Zum anderen ist es vorteilhaft, wenn der Kernbereich des Folienabschnitts bei dieser schlagartigen Verformung eine Kembereichstemperatur aufweist, die niedriger ist, als diese Folienoberflächentemperatur. Vorzugsweise kann bei dieser schlagartigen Verformung die Kembereichstemperatur um wenigstens 10 °C niedriger sein, als die jeweilige Folienoberflächentemperatur. Noch weiter bevorzugt wird das Folienstück nach Erwärmung auf die je vorgesehene Folienoberflächentemperatur sofort und innerhalb einer Zeitspanne kleiner 5 sec, besonders bevorzugt kleiner 2 sec, ganz besonders bevorzugt kleiner 1 sec in die Verformungszone überführt und dort sofort und schlagartig verformt. Hierdurch lässt sich eine Verbesserung der Abbildungsgenauigkeit bei der schlagartigen Verformung erzielen.

Auch wenn das erwärmte Folienstück auf dem Weg von der Heizzone zur Verformungszone die Temperaturmess-Station passiert und dabei mit Hilfe der Wärmebildkammer die Temperaturverteilung an der Folienoberfläche abgetastet, sichtbar gemacht und/oder auf sonstige Weise dargestellt wird, wird das Folienstück nach Erwärmung auf die je vorgesehenen Folienoberflächentemperatur sofort und vorzugsweise innerhalb einer Zeitspanne kleiner 5 sec, besonders bevorzugt kleiner 2 sec, ganz besonders bevorzugt innerhalb einer Zeitspanne kleiner 1 sec in die Verformungszone überführt und dort sofort und schlagartig verformt.

In der Verformungszone wird die bekannte Hochdruckumformung bzw. das bekannte High Pressure Forming an dem so erwärmten Folienstück vorgenommen. Hierzu können die aus dem Dokument EP 0 371 425 81 bekannten Maßnahmen angewandt sowie die dort beschriebenen Vorrichtungen benutzt werden. Mit dieser ausdrücklichen Bezugnahme soll der hier relevante Inhalt dieses Dokuments - soweit zum Verständnis und zur Durchführung des erfindungsgemäßen Verfahrens hilfreich - auch zum Bestandteil der vorliegenden Unterlagen gemacht werden.

Des Weiteren kann die Hochdruckumformung des so erwärmten Folienstücks auch in einer Formstation mit Hilfe eines Formwerkzeugs durchgeführt werden, die/das in dem Dokument DE 41 13 568 C1 beschrieben ist. Mit dieser ausdrücklichen Bezugnahme soll auch der hier relevante Inhalt des zuletzt genannten Dokuments - soweit zum Verständnis und zur Durchführung des erfmdungsgemäßen Verfahrens hilfreich - zum Bestandteil der vorliegenden Unterlagen gemacht werden.

In der Verformungszone kann eine Presse entsprechend der aus dem Dokument DE 41 13 568 C1 bekannten Bauart vorgesehen werden. Der das erwärmte Folienstück haltende Rahmen wird in das geöffnete Formwerkzeug eingesetzt und passgenau an der unteren Werkzeughälfte festgelegt. Der untere Formtisch wird angehoben, bis das Formwerkzeug geschlossen ist. In die, über dem zu verformenden Folienstück befindliche, Formmulde wird fluides Druckmittel, typischerweise Druckluft eingeleitet. Typischerweise wird schlagartig unter einem Druckmitteldruck von 20 bis 300 bar verformt. Vorzugsweise wird mit Hilfe von erwärmter Druckluft verformt, die bei Kontaktierung des Folienstücks eine Temperatur von etwa 60 bis 80 °C aufweist. Anschließend wird die Formmulde entlastet, der untere Formtisch wird abgesenkt, das Formwerkzeug wird geöffnet, die verformte Folie wird vom Werkzeug gelöst bzw. entformt, der weiterhin das abgekühlte und verformte Folienstück haltende Rahmen wird von der unteren Werkzeughälfte gelöst und in die Ausgangsposition zurückgefahren. Dort wird das verformte Folienstück von Hand oder automatisch vom Rahmen gelöst und nach Bedarf zurecht geschnitten, um das gewünschte Tiefziehteil zu erhalten.

### BEISPIELE

Die nachfolgenden Beispiele und Vergleichsbeispiele dienen zur weiteren Erläuterung der vorliegenden Erfindung ohne diese einzuschränken.

Die Zeichnung zeigen mit
- Fig. 1: anhand einer schematischen Seitenansicht eine Ausführungsform einer Vorrichtung zur Durchführung des erfindungsgemäßen Verfahrens;
- Fig. 2: ein nicht erfindungsgemäß hergestelltes PC-Tiefziehteil für ein Kombinationsinstrument mit Tachoscheibe und mit Zifferblatt für einen Drehzahlmesser, im Wesentlichen in Originalgröße, wobei die verschiedenen Farben einzelner Symbole und Elemente schriftlich angegeben sind; und
- Fig. 3: ein nach dem erfindungsgemäßen Verfahren hergestelltes PMMA-Zifferblatt für einen Drehzahlmesser bzw. eine "Drehzahlmesserscheibe", im Wesentlichen in Originalgröße, wobei die verschiedenen Farben einzelner Symbole und Elemente schriftlich angegeben sind.

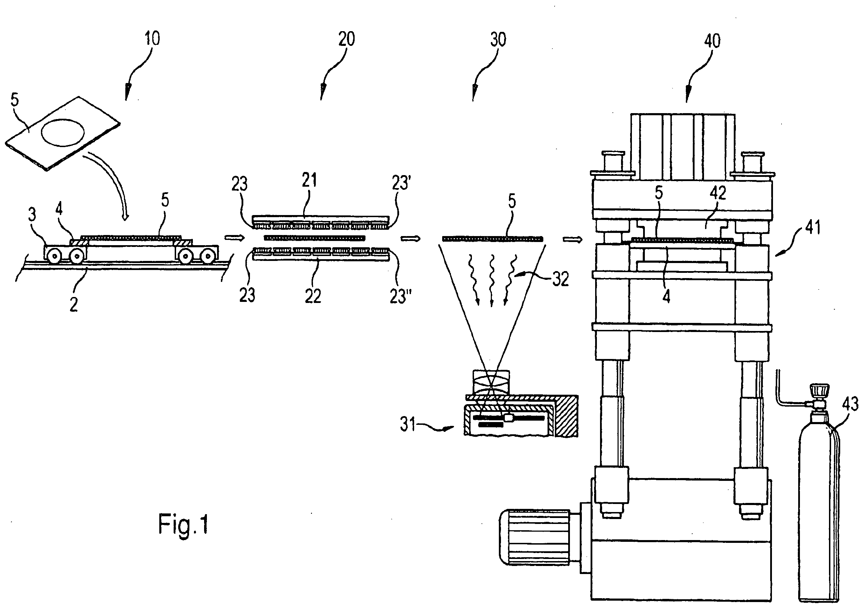

An der Vorrichtung nach Fig.1 sind je in an sich bekannter Form eine Be-und Entladezone 10, eine Heizzone 20, eine Temperaturmess-Station 30 und eine Verformungszone 40 ausgebildet. Ein an Schienen 2 geführter Schlitten 3 transportiert einen rechteckigen Rahmen 4 aus der Be- und Entladezone 10 über die Heizzone 20 und die Temperaturmess-Station 30 in die Verformungszone 40 und zurück. Zum Antrieb des Schlittens 3 dient ein - nicht dargestellter - für hohe Beschleunigungen und hohe Vorschubgeschwindigkeit ausgelegter Schrittmotor; beispielsweise kann der Schlitten 3 mit einer Geschwindigkeit von 1.400 mm/sec verstellt werden.

In der Be- und Entladezone 10 wird von Hand oder automatisch ein ebenes, bedrucktes, metallisiertes und/oder sonst wie beschichtetes und zu verformendes Folienstück 5 in definierter Anordnung an dem Rahmen 4 angebracht. Das Folienstück 5 ist lediglich mit seinen randseitigen Abschnitten am Rahmen 4 abgestützt.

Die Heizzone 20 ist von einem oberen Heizfeld 21 und von einem unteren Heizfeld 22 begrenzt. Seide Heizfelder 21 und 22 sind flächengleich ausgebildet, horizontal ausgerichtet und im Abstand von etwa 100 mm zueinander sowie miteinander fluchtend angeordnet. Jedes Heizfeld 21, 22 weist beispielsweise zweiundvierzig Infrarot-Flächenstrahler 23 auf, die je Abmessungen von 60 x 60 mm haben und je individuell ansteuerbar sind.

In der Temperaturmess-Station 30 befindet sich eine Wärmebildkamera 31, welche die von der Unterseite des erwärmten Folienstücks 5 abgestrahlte, hier schematisch angedeutete Temperaturstrahlung 32 erfasst und auswertet. Die so gewonnene Temperaturverteilung kann auf einem - nicht dargestellten Bildschirm - dargestellt werden, wobei jedem, miteinander fluchtenden Infrarot-Strahler-Paar 23'/23" je ein Feld auf dem Bildschirm zugeordnet sein kann. Die Temperaturverteilung an der Oberfläche der Folienstück-Unterseite kann anhand einer Farbcodierung und/oder ziffernmäßig angegeben werden.

Die Verformungszone 40 kann mit einer Presse 41 mit Formwerkzeug 42 ausgerüstet sein, wie im Dokument DE 41 13 568 C1 beschrieben. An dieses Formwerkzeug 42 ist ein Druckluftbehälter 43 angeschlossen, aus dem Druckluft bereitgestellt wird. Der vom Schlitten 3 in das geöffnete Formwerkzeug 42 eingeführte Rahmen 4 wird innerhalb des Formwerkzeugs 42 passgenau angeordnet. Das Formwerkzeug 42 wird mit Hilfe der Presse 41 geschlossen, und das am Rahmen 4 gehaltene Folienstück 5 wird unmittelbar und direkt mit erwärmter Druckluft unter einem Druckmitteldruck von beispielsweise 160 bar beaufschlagt und schlagartig isostatisch an die Kontur des Formwerkzeugs 42 angeformt. Bei dieser Verformung weist wenigstens eine Seite des Folienabschnitts des am Rahmen 4 gehaltenen Folienstücks 5 die erfindungsgemäß vorgesehene Folienoberflächentemperatur auf.

Nach dieser Verformung wird das Formwerkzeug 42 geöffnet, und der Schlitten 3 transportiert den Rahmen 4 mit dem verformten Folienstück bzw. Tiefziehteil zurück in die Be- und Entladezone 10. Dort kann das Tiefziehteil automatisch oder von Hand vom Rahmen 4 gelöst und aus der Vorrichtung 1 entnommen werden.

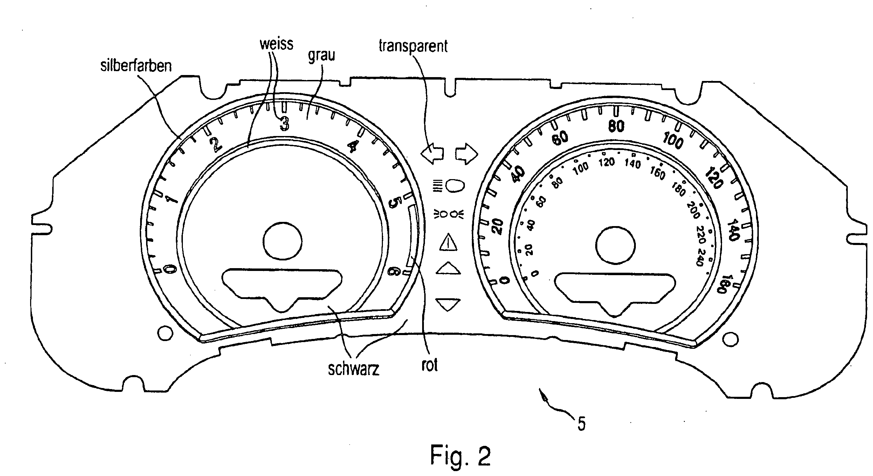

Das in Fig. 2 dargestellte Tiefziehteil hat eine Länge von 360 mm und eine Höhe von 105 mm. Die Tachoscheibe und die Drehzahlmesserscheibe haben je einen Durchmesser von 113 mm. Die Platte der Scheibe ist schwarz, die Ziffern sind weiß vor einem grauen Hintergrund, und das Randstreifensegment zwischen den Ziffern "5 "und "6" der Drehzahlmesserscheibe ist rot. Die zwischen den beiden Scheiben angeordneten Piktogramme sind durchscheinend und werden je bei Aktivierung einer je zugeordneten Hintergrundbeleuchtung sichtbar. Auffällig ist ein anfänglich stufenförmiger und anschließend kegelförmiger Anstieg von der Plattenebene bis zu einem silberfarbenen Randwulst, der etwa 12 mm oberhalb der Plattenebene endet. An diesem silberfarbenen Randwulst sind die weißen, auf, die Ziffern zu zeigenden Markierungen von sehr feinen schwarzen Randstreifen begrenzt.

Als Ausgangsmaterial diente eine 375 µm dicke, auf einer Oberfläche fein mattierte PC-Folie (Makrofol® OE von BAYER MATERIALSCIENCE AG), die auf der nicht mattierten Oberfläche im mehrstufigen Siebdruckverfahren mit den vorstehend genannten, hochtemperaturbeständigen und flexiblen Farblacken bedruckt worden ist. Der silberfarbene Ring wurde mit Hilfe einer Al-Bronze-Suspension aufgebracht.

Die so bedruckten, ebenen Folienstücke wurden - ohne vorausgegangene Temperbehandlung - in der Heizzone auf die in der nachstehenden Tabelle 1 angegebenen Folienoberflächentemperaturen erwärmt; die Verweildauer in der Heizzone kontrolliert die erreichte Folienoberflächentemperatur. Die Folienoberflächentemperatur wurde mit Hilfe der Wärmebildkamera an der Folienunterseite gemessen. Beim nicht erfinderischen Beispiel 3 wurden die den Randwulst bildenden Folienstücksegmente auf eine erhöhte Temperatur erwärmt, welche die Folienoberflächentemperatur um etwa 5 °C überstieg: hierzu wurden die, diesen ausgewählten Folienstücksegmenten zugeordneten Infrarot-Flächenstrahler-Paare mit einer höheren elektrischen Leistungsaufnahme angesteuert.

Nach Erreichung der je angegebenen Folienoberflächentemperatur wurde die Folie sofort und schnell (innerhalb einer Zeitspanne kleiner 1 sec) in die Verformungszone überführt und dort sofort und schlagartig umgeformt. Zur Umformung wurde das weiterhin die jeweilige Folienoberflächentemperatur aufweisende Folienstück mit etwa 70 °C warmer Druckluft unter einem Druckluftdruck von 160 bar beaufschlagt. Die Hochtemperaturphase von Erreichung der Folienoberflächentemperatur bis zum Abschluss der Verformung eines gegebenen Folienstücks dauerte weniger als 5 sec.

Die Ergebnisse sind in Tabelle 1 dargestellt.

### Erfinderische Beispiele und Vergleichsbeispiele zur Verformung einer PMMA-Folie

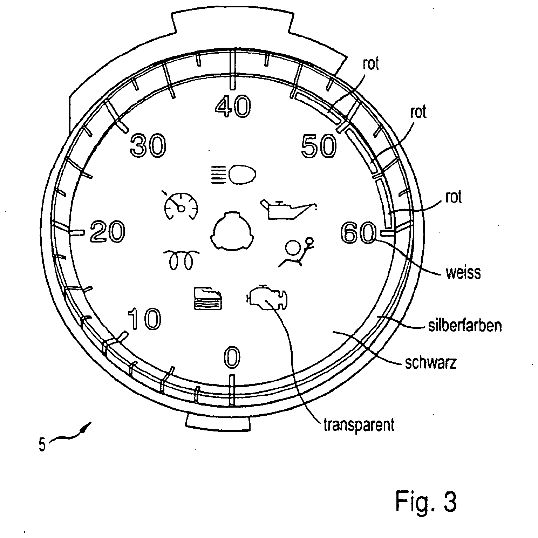

Die in Fig. 3 dargestellte Drehzahlmesserscheibe hat einen Durchmesser von 100 mm. Die Platte ist schwarz, die Beschriftung einschließlich der Ziffern ist weiß, und die Randstreifensegmente zwischen den Ziffern 40 und 60 sind rot. Die um die zentrale Öffnung herum gruppierten Piktogramme sind durchscheinend und werden je bei Aktivierung einer je zugeordneten Hintergrundbeleuchtung sichtbar. Auffällig ist der silberfarbene, kegelförmig ansteigende Randwulst, der 5 mm oberhalb der Plattenebene endet. An diesem silberfarbenen Randwulst sind die weißen, auf die Ziffern zu zeigenden Markierungen von sehr feinen schwarzen Randstreifen begrenzt.

Als Ausgangsmaterial diente eine 250 µm dicke, glasklare PMMA-Folie (Plexiglas® Film "Clear 99524" von Röhm GmbH & Co. KG), die auf einer Oberfläche in mehreren Stufen mit temperaturbeständigen und flexiblen Farblacken entsprechend der graphischen Gestaltung des Zifferblattes des Drehzahlmessers nach Fig. 3 bedruckt worden ist. Der silberfarbene Ring ist mit Hilfe einer Al-Bronze-Suspension aufgebracht worden. Auf der anderen Oberfläche, der späteren Vorderseite, ist eine Strukturlackschicht aufgebracht worden, um einen "Matteffekt" bzw. die geforderte Haptik zu erreichen. Zusätzlich ist auf dieser späteren Vorderseite eine Hardcoat-Beschichtung aufgebracht worden, die eine zusätzliche Verbesserung der Kratzbeständigkeit der Oberfläche des Tiefziehteils bewirkte.

Die Ergebnisse sind in Tabelle 2 dargestellt.

**Tabelle 1**

| **Verformung einer PC-Folie bei verschiedenen Temperaturen** | | | | | |
|---|---|---|---|---|---|
| **Beispiel** | **Oberflächentemperatur der Folie** | **Kerntemperatur* der Folie** | **Verformergebnis** | **Oberflächenbeschaffenheit** | **Kommentar** |
| Vergleichsbeispiel 1 | 150 °C | 130 °C | Zifferblatt in sich verdreht/verspannt; Bodenfläche nicht plan; Farbaufbruch; ungenaue Ausformung | Struktur bleibt erhalten; Rissbildung im Material erkennbar; (Schwangerschaftsstreifen) | Verformungsprozess zu kalt, Folien-material nicht genügend flexibilisiert |
| nicht erfinderisches Beispiel 1 | 176 °C | 154 °C | Reduzierung der Spannungen; Bodenfläche weiterhin nicht plan (Bombage); verbesserte Ausformung | Keine Veränderung der Struktur; deutliche Reduzierung der Rissbildung | tendenzielle Verbesserung des Verformungsprozesses-; ungenügende geometrische Stabilität des Zifferblattes |
| nicht erfinderisches Beispiel 2 | 192 °C | 173 °C | nahezu spannungsfreies Zifferblatt, d.h. sehr gute Planlage nach Vereinzelung; akkurate Ausformung aller Radien und Übergänge; Keine Beschädigung des Farbsystems erkennbar | Struktur unbeschädigt; keine Rissbildung | Folie bleibt auch nach dem Stanzen formstabil; rotationssymetrische Anordnung/Positionierung der Symbolik gleichbleibend |
| nicht erfinderisches Beispiel 3 | 192 °C, einige Folienstück-Segmente 197 °C | 174 °C | keine Spannungen erkennbar; Zifferblatt liegt absolut plan; Farbsystem in Ordnung; keine Be-Schädigung an Folie oder Farbsystems sichtbar | entsprechend der Anforderung; Matteffekt und Haptik in Ordnung | optimale Kombination der Oberflächen- und Kerntemperatur; Folie bleibt auch nach dem Stanzen formstabil; rotationssymetrische Anordnung/Positionierung der Symbolik gleich bleibend. |
| Vergleichsbeispiel 2 | 210 °C | 197 °C | nahezu spannungsfreies Zifferblatt, d.h. sehrgute Planlage nach Vereinzelung; akkurate Ausformung aller Radien und Übergänge, leichtes "Überwulsten" des Randes, leichte Blasenbildung durch Ausdiffundieren des Lösemittels | Struktur der Oberfläche wird Beschädigt; mattschwarzer Folienanteil wirkt "speckig" (Glanzgradbildung) | Verformungsprozess zu heiß, Folienstruktur wird plastisch, Positionierung der Symbole verändert sich/nicht wiederholgenau: Farbsystem wirft Blasen; Ausformung i.O. Erscheinungsbild Farbe und Struktur n.i.O.; |
| * die Kerntemperatur ist anhand verschiedener interner Beobachtungen und Erfahrungswerte geschätzt worden | | | | | |

**Tabelle 2**

| **Verformung einer PMMA-Folie bei verschiedenen Temperaturen** | | | | | |
|---|---|---|---|---|---|
| **Beispiel** | **Oberflächen temperatur der Folie** | **Kerntemperatur* der Folie** | **Verformergebnis** | **Oberflächenbeschaffenheit** | **Kommentar** |
| Vergleichsbeispiel 3 | 100°C | 90 °C | negative; Folie gerissen/aufgebrochen | | Verformungsprozess zu kalt, Folien-material bei dieser Temperatur zu spröde; keine Verformung möglich |
| Vergleichsbeispiel 4 | 120 °C | 110 °C | Folie nicht gebrochen; Ausformung nicht optimal-Weissbruch; deutliche Spannungen im Verformbereich; | Abrisse innerhalb des Folienmaterials erkennbar; Oberfläche nicht homogen | Verformung möglich; Material immer noch zu spröde; ungenügende geometrische Stabilitär des Ziffernblattes; Weissbruch verändert Erscheinungsbild des Farbaufbaus |
| erfinderisches Beispiel 4 | 140 °C | 130 °C | Spannungsfreies Ziffernblatt, d.h. sehr gute Planlage nach Vereinzelung; scharfkantige Ausformung aller Radien und Übergänge, partieller Weissbruch; keine Beschädigung des Farbsystems erkennbar | keine Abrisse sichtbar; unveränderte Folienerscheinung | minimaler partieller Weissbruch |
| erfinderisches Beispiel 5 | 140 °C, einige Folienstück-Segmente 145 °C | 135 °C | Spannungsfreies Ziffernblatt, d.h. sehr gute Planlage nach Vereinzelung; scharfkantige Ausformung aller Radien und Übergänge, kein Weissbruch; keine Beschädigung des Farbsystems erkennbar | keine Abrisse sichtbar; unveränderte Folienerscheinung | optimale Kombination der Oberflächen- und Kerntemperatur; Folie absolut plan; rotationssymetrische Anordnung/Positionierung der Symbolik gleichbleibend; Durch partielle Erwärmung tritt kein Weissbruch auf; gleichbleibende Wiederholbarkeit gewährleistet |
| Vergleichsbeispiel 5 | 160 °C | 150 °C | Starkes Schwindungsverhalten der Seitenränder; Ausformung scharfkantig; kein Weissbruch; Farbe Schwarz wirkt bläulich | Transparente Bereich der Folie wirken "neblig"; Erscheinungsbild der Folie verändert sich | Verformungsprozess zu heiß, Folienstruktur/Transparenz verändert sich; auffällig starke Schwindung; Positionierung der Symbole variiert/nicht wiederholgenau |
| * die Kerntemperatur ist anhand verschiedener interner Beobachtungen und Erfahrungswerte geschätzt worden | | | | | |

## Patentansprüche

1. Verfahren zur Herstellung eines, wenigstens teilweise bedruckten, metallisierten und/oder sonst wie beschichteten, tiefgezogenen Folienteils, mit wenigstens nachstehenden Verfahrensschritten:
- es wird ein, ebenes, auf einer oder auf beiden Oberfläche(n) wenigstens teilweise bedrucktes, metallisiertes und/oder sonst wie beschichtetes Folienstück aus wenigstens einem thermoplastischen Kunststoff bereitgestellt, das wenigstens einen Folienabschnitt umfasst, der hinsichtlich Größe und Bedruckung, Metallisierung und/oder Beschichtung dem herzustellenden Tiefziehteil entspricht;
- dieses Folienstück wird in definierter Anordnung an einem Rahmen angebracht, wobei lediglich die randseitigen Abschnitte des Folienstücks auf dem Rahmen aufliegen;
- das so auf dem Rahmen aufliegende Folienstück wird in eine Heizzone eingebracht, und dort wenigstens der Folienabschnitt auf eine vorgegebene Temperatur erwärmt; und
- das so erwärmte Folienstück wird anschließend rasch in eine Verformungszone eingebracht und dort unmittelbar und direkt mit einem fluiden Druckmittel unter einem Druckmitteldruck größer 20 bar beaufschlagt und innerhalb einer Zeitspanne kleiner 5 Sekunden isostatisch zu dem gewünschten Tiefziehteil verformt,
**dadurch gekennzeichnet, dass** eine solche Erwärmung berührungslos vorgenommen wird, damit wenigstens eine Seite des gesamten Folienabschnitts oder des überwiegenden Teils des Folienabschnitts eine Folienoberflächentemperatur im Bereich von 20 bis 50 °C oberhalb der Vicat-Erweichungstemperatur B/50 aufweist, wobei der thermoplastische Kunststoff Polymethylmethacrylat oder Poly(meth)acrylat ist und wobei die Erwärmung über eine Strahlungsheizung mit Hilfe von Infrarotstrahlung erfolgt.

2. Verfahren nach Anspruch 1, **dadurch gekennzeichnet, dass** das Folienstück zur Erwärmung in der Heizzone eine Zeitspanne lang im Abstand zu wenigstens einem, aus einer Anzahl individuell ansteuerbarer Infrarot-Flächenstrahler aufgebauten, Heizfeld gehalten wird; und
das so erwärmte Folienstück auf dem Weg von der Heizzone zur Verformungszone eine Temperaturmess-Station passiert, in der mit Hilfe einer Wärmebildkammer die Temperaturverteilung an einer Folienoberfläche abgetastet, sichtbar gemacht und/oder auf sonstige Weise dargestellt wird; und
dass eine differenzielle Erwärmung vorgenommen wird,
wozu jeder einzelne Infrarot-Flächenstrahler individuell so angesteuert wird,
- um die aus der Temperaturverteilung ersichtlichen Temperaturunterschiede am Folienabschnitt zu minimieren, und
- um wenigstens eine Seite des überwiegenden Folienabschnitts auf eine Folienoberflächentemperatur im oben genannten Bereich für das jeweilige Folienmaterial zu erwärmen, und
- um wahlweise einzelne ausgewählte Folienstücksegmente auf eine höhere Temperatur zu erwärmen, welche diese Folienoberflächentemperatur um wenigstens 3 °C und um nicht mehr als 10 °C übersteigt.

3. Verfahren nach Anspruch 2, **dadurch gekennzeichnet, dass** solche Folienstücksegmente ausgewählt werden, in denen eine höhere Flexibilisierung des Folienmaterials erreicht werden soll.

4. Verfahren nach Anspruch 3, **dadurch gekennzeichnet, dass** solche Folienstücksegmente ausgewählt werden, in denen eine besonders starke Umformung der ursprünglich ebenen Folie erfolgen soll oder in denen eine exakte Abformung scharfkantiger Konturen, eine passgenaue Wiedergabe besonders feinteiliger Prägungen und/oder Ziselierungen, sowie eine Korrektur druckbedingter Positionsabweichungen erreicht werden soll.

5. Verfahren nach einem der Ansprüche 1 bis 4, **dadurch gekennzeichnet, dass** eine Anzahl tiefgezogener Folienteile gleicher Art hergestellt wird; und
nur bei der Herstellung eines Teils aller tiefgezogenen Folienteile dieser Art der Verfahrensschritt der Messung und Auswertung der Temperaturverteilung an einer Folienoberfläche durchgeführt wird; und bei der Herstellung des restlichen Anteils der tiefgezogenen Folienteile dieser Art dieser Verfahrensschritt nicht ausgeführt wird.

6. Verfahren nach einem der vorstehenden Ansprüche, **dadurch gekennzeichnet, dass** das auf dem Rahmen aufliegende Folienstück in eine Heizzone eingebracht wird, die zwei flächengleiche, horizontal ausgerichtete, parallel im Abstand zueinander und miteinander fluchtend angeordnete Heizfelder aufweist; und das Folienstück zur Erwärmung auf die je vorgesehene Folienoberflächentemperatur etwa mittig zwischen diesen beiden Heizfeldern angeordnet und eine Zeit lang gehalten wird.

7. Verfahren nach einem der vorstehenden Ansprüche, **dadurch gekennzeichnet, dass** das Folienstück nach Erwärmung auf die je vorgesehene Folienoberflächentemperatur innerhalb einer Zeitspanne kleiner 5 sec, bevorzug kleiner 2 sec in die Verformungszone überführt wird.

8. Verfahren nach einem der vorstehenden Ansprüche, **dadurch gekennzeichnet, dass** transparente Folienstücke verarbeitet werden, die entsprechend einem vorgegebenen Layout bedruckt, metallisiert und/oder sonst wie beschichtet worden sind.

9. Verfahren nach einem der vorstehenden Ansprüche, **dadurch gekennzeichnet, dass** einlagige Folienstücke verarbeitet werden, die entsprechend einem vorgegebenen Layout bedruckt, metallisiert und/oder sonst wie beschichtet worden sind.

10. Verfahren nach einem der vorstehenden Ansprüche, **dadurch gekennzeichnet, dass** es sich bei den zu verformenden Folienstücken um eine mehrschichtige Koextrusionsfolie oder Laminat-Folie aus wenigstens zwei unterschiedlichen thermoplastischen Kunststoffen handelt.

## Claims

1. Method for producing an at least partly printed, metallized and/or otherwise coated, deep-drawn film part, comprising at least the following method steps:
- a flat piece of film at least partly printed, metallized and/or otherwise coated on one or both surface(s) and made of at least one thermoplastic material is provided, comprising at least one film section which, with regard to size and printing, metallization and/or coating, corresponds to the deep-drawn part to be produced;
- this piece of film is fitted in a defined arrangement to a frame, only the marginal sections of the piece of film resting on the frame;
- the piece of film resting on the frame in this way is introduced into a heating zone and at least the section of film is heated there to a predefined temperature; and
- the piece of film heated in this way is then introduced quickly into a deforming zone and is acted on immediately and directly there with a fluid pressurized medium under a pressurized medium pressure of greater than 20 bar and, within a time interval of less than 5 seconds, is deformed isostatically to form the desired deep-drawn part,
**characterized in that** such heating is performed by a contactless method in order that at least one side of the entire section of film or the predominant part of the section of film has a film surface temperature in the range from 20 to 50°C above the Vicat softening temperature B/50, where the thermoplastic is polymethyl methacrylate or poly(meth)acrylate, and where the heating is carried out by means of radiant heating via infrared radiation.

2. Method according to Claim 1, **characterized in that**, in order to be heated in the heating zone, the piece of film is kept for a time period at a distance from at least one heating field built up from a number of individually controllable infrared surface radiators; and
on the way from the heating zone to the deforming zone, the piece of film heated in this way passes through a temperature measuring station in which, with the aid of a thermal imaging chamber, the temperature distribution on a film surface is scanned, made visible and/or displayed in another way; and
**in that** differential heating is performed,
for which purpose each individual infrared surface radiator is driven individually,
- in order to minimize the temperature differences on the section of film that can be seen from the temperature distribution, and
- in order to heat at least one side of the predominant section of film to a film surface temperature in the aforementioned range for the respective film material, and
- in order optionally to heat individual selected segments of the piece of film to a higher temperature which exceeds this film surface temperature by at least 3°C and by no more than 10°C.

3. Method according to Claim 2, **characterized in that** those segments of the piece of film are selected in which higher flexibilization of the film material is to be achieved.

4. Method according to Claim 3, **characterized in that** those segments of the piece of film are selected in which particularly high reshaping of the originally flat film is to be carried out or in which exact replication of sharp-edged contours, accurate-register reproduction of particularly finely divided embossing and/or engraving and correction of pressure-induced position deviations is intended to be achieved.

5. Method according to one of Claims 1 to 4, **characterized in that** a number of deep-drawn film parts of identical type are produced; and
only during the production of a part of any of the deep-drawn film parts of this type is the method step of measuring and evaluating the temperature distribution on a film surface carried out; and during the production of the remaining proportion of the deep-drawn film parts of this type, this method step is not carried out.

6. Method according to one of the preceding Claims, **characterized in that** the piece of film resting on the frame is introduced into a heating zone which has two equal-area heating fields aligned horizontally, arranged parallel at a distance from each other and in alignment with each other; and the piece of film, in order to be heated to the film surface temperature envisaged in each case, is arranged approximately centrally and kept for some time between these two heating fields.

7. Method according to one of the preceding Claims, **characterized in that**, following heating to the film surface temperature envisaged in each case, the piece of film is transferred into the deforming zone within a time interval of less than 5 seconds, preferably less than 2 seconds.

8. Method according to one of the preceding Claims, **characterized in that** transparent pieces of film which have been printed, metallized and/or otherwise coated in accordance with a predefined layout are processed.

9. Method according to one of the preceding Claims, **characterized in that** single-layer pieces of film which have been printed, metallized and/or otherwise coated in accordance with a predefined layout are processed.

10. Method according to one of the preceding Claims, **characterized in that** the pieces of film to be deformed are a multi-layer extruded film or laminated film made of at least two different thermoplastic materials.

## Revendications

1. Procédé pour la production d'une pièce en feuille emboutie au moins partiellement imprimée, métallisée et/ou revêtue d'une manière quelconque, présentant au moins les étapes de procédé suivantes :
- mise à disposition d'un morceau de feuille, plan, au moins partiellement imprimé, métallisé et/ou revêtu d'une manière quelconque sur une ou les deux faces, en au moins un matériau synthétique thermoplastique, qui comprend au moins une section de feuille qui correspond, en ce qui concerne la taille et l'impression, la métallisation et/ou le revêtement, à la pièce emboutie à produire ;
- ce morceau de feuille est agencé dans une disposition définie dans un cadre, où seules les sections de bord du morceau de feuille se placent sur le cadre ;
- le morceau de feuille ainsi placé sur le cadre est introduit dans une zone de chauffage et au moins la section de feuille y est chauffée à une température prédéfinie ; et
- le morceau de feuille ainsi chauffé est ensuite introduit rapidement dans une zone de déformation et y est soumis immédiatement et directement à un agent sous pression fluide à une pression d'agent sous pression supérieure à 20 bars et déformé de manière isostatique en un laps de temps inférieur à 5 secondes en pièce emboutie souhaitée,
**caractérisé en ce qu'**on réalise un tel chauffage sans contact de sorte qu'au moins une face de la section de feuille totale ou de la partie principale de la section de feuille présente une température superficielle de feuille dans la plage de 20 à 50°C au-dessus de la température de ramollissement de Vicat B/50, le matériau synthétique thermoplastique étant du poly(méthacrylate de méthyle) ou du poly(méth)acrylate et le chauffage s'effectuant par le biais d'un chauffage par rayonnement à l'aide de rayonnement infrarouge.

2. Procédé selon la revendication 1, **caractérisé**
**en ce que** le morceau de feuille, pour le chauffage dans la zone de chauffage, est maintenu pendant un certain laps de temps, à une certaine distance d'au moins un champ chauffant constitué par un certain nombre d'émetteurs plats d'infrarouges pouvant être commandés individuellement ; et
le morceau de feuille ainsi chauffé passe, sur le trajet de la zone de chauffage à la zone de déformation, dans un poste de mesure de la température, dans lequel, à l'aide d'une chambre d'image thermique, la répartition de la température sur une surface de la feuille est détectée, visualisée et/ou représentée d'une manière quelconque ; et
**en ce qu'**un chauffage différentiel est réalisé,
où chaque émetteur plat d'infrarouges individuel est contrôlé individuellement de manière à
- minimiser les différences de température visibles par la répartition de la température sur la section de feuille, et
- chauffer au moins une face de la section principale de la feuille à une température superficielle de la feuille dans la plage susmentionnée pour chaque matériau de feuille, et
- chauffer au choix différents segments choisis du morceau de feuille à une température supérieure, qui dépasse cette température superficielle de feuille d'au moins 3°C et de pas plus de 10°C.

3. Procédé selon la revendication 2, **caractérisé en ce qu'**on choisit des segments de morceau de feuille dans lesquels une souplesse plus élevée du matériau de feuille doit être atteinte.

4. Procédé selon la revendication 3, **caractérisé en ce qu'**on choisit des segments de morceau de feuille dans lesquels une déformation particulièrement forte de la feuille plane au départ doit être réalisée ou dans lesquels une conformation exacte de contours à arêtes vives, une reproduction précise d'empreintes et/ou de ciselages particulièrement fins, ainsi qu'une correction de déviations de position provoquées par la pression doivent être réalisées.

5. Procédé selon l'une quelconque des revendications 1 à 4, **caractérisé en ce qu'**on produit un certain nombre de pièces de feuille embouties de même type ; et
l'étape de procédé de mesure et d'évaluation de la répartition de température sur une surface de la feuille n'est réalisée que lors de la production d'une partie de toutes les pièces en feuille embouties de ce type ; et lors de la production de la partie résiduelle des pièces en feuille embouties de ce type, cette étape de procédé n'est pas réalisée.

6. Procédé selon l'une quelconque des revendications précédentes, **caractérisé en ce que** la pièce en feuille se trouvant sur le cadre est introduite dans une zone de chauffage qui présente deux champs chauffants de même superficie, orientés horizontalement, disposés parallèlement à une certaine distance l'un de l'autre et alignés l'un sur l'autre ; et le morceau de feuille est disposé environ au centre entre ces deux champs chauffants et y est maintenu pendant un certain laps de temps pour le chauffage à la température superficielle à chaque fois prévue de la feuille.

7. Procédé selon l'une quelconque des revendications précédentes, **caractérisé en ce que** le morceau de feuille, après le chauffage à la température superficielle à chaque fois prévue de la feuille, est transféré en un laps de temps de moins de 5 sec, de préférence de moins de 2 sec, dans la zone de déformation.

8. Procédé selon l'une quelconque des revendications précédentes, **caractérisé en ce qu'**on transforme des morceaux de feuille transparents, qui ont été imprimés, métallisés et/ou revêtus d'une manière quelconque selon un modèle prédéfini.

9. Procédé selon l'une quelconque des revendications précédentes, **caractérisé en ce qu'**on transforme des morceaux de feuille à une couche, qui ont été imprimés, métallisés et/ou revêtus d'une manière quelconque selon un modèle prédéfini.

10. Procédé selon l'une quelconque des revendications précédentes, **caractérisé en ce qu'**il s'agit, pour les morceaux de feuille à déformer, d'une feuille coextrudée à plusieurs couches ou d'une feuille laminée constituée par au moins deux matériaux synthétiques thermoplastiques différents.
